# FASCICULE DE BREVET EUROPEEN

(11) **EP 3 662 196 B1**
(45) Date de publication et mention de la délivrance du brevet: **19.05.2021**
(21) Numéro de dépôt: 18786833.6
(22) Date de dépôt: 01.08.2018
(51) Int. Cl.: F17C 13/04, F16K 27/00

(54) **MODULE POUR UN KIT DE DISTRIBUTION ET DE RÉGULATION D'UN GAZ SOUS PRESSION, KIT ET SYSTÈME DE DISTRIBUTION ET DE RÉGULATION ASSOCIÉS**
MODUL FÜR EINEN KIT ZUR VERTEILUNG UND REGELUNG EINES UNTER DRUCK STEHENDEN GASES, ZUGEHÖRIGES VERTEILUNGS- UND REGELUNGSKIT UND SYSTEM
MODULE FOR A KIT FOR DISTRIBUTING AND REGULATING A PRESSURISED GAS, ASSOCIATED DISTRIBUTION AND REGULATION KIT AND SYSTEM

(30) Priorité: 03.08.2017 FR 1757483
(43) Date de publication de la demande: 10.06.2020
(73) Titulaire: Alcrys Fluid-Control & Services, 13120 Gardanne (FR)
(72) Inventeur: HEYRAL, Olivier, 13590 Meyreuil (FR)
(74) Mandataire: Chevalier, Renaud Philippe
(86) Numéro de dépôt international: PCT/FR2018/051989
(87) Numéro de publication internationale: WO 2019/025734

(56) Documents cités:
- WO-A1-2017/063707
- WO-A2-2005/008107
- US-A- 5 860 676
- US-B1- 6 302 141

## Description

La présente invention se rapporte à un module pour un kit de distribution et de régulation d'un gaz sous pression, à un tel kit de distribution et de régulation d'un gaz sous pression et ainsi qu'à un système de distribution et de régulation d'un gaz sous pression construit à partir d'un tel kit. US 5 860 676 A divulgue un tel module.

L'invention trouve une application particulière, et non limitative, dans une station de distribution d'hydrogène gazeux pour alimenter un réservoir d'une pile à combustible, en particulier au sein d'un véhicule.

Dans de telles stations de distribution d'hydrogène gazeux, l'hydrogène gazeux est comprimé à très haute pression (au moins supérieure à 500 bars voire au-delà de 700 à 1000 bars) et stocké dans des réservoirs tampons, et un système de distribution et de régulation est nécessaire, en amont et en aval des réservoirs tampons, pour effectuer une détente et une distribution sécurisées de l'hydrogène gazeux à destination du réservoir de la pile à combustible.

Un tel système de distribution et de régulation requiert l'emploi de dispositifs de distribution ou de régulation tels que des vannes de sectionnement à actionnement manuel, des vannes de sectionnement à actionnement pneumatique, des vannes de sectionnement à actionnement électrique (ou électrovannes), des détendeurs, des dispositifs d'isolation de non-retour (ou clapets de non-retour), des soupapes de sûreté, des dispositifs de filtration, etc.

De manière classique, les systèmes de distribution et de régulation sont constitués d'un assemblage de dispositifs de distribution ou de régulation provenant de différents fabricants, constituant des composants hétérogènes peu aisés à mettre en œuvre et requérant de nombreux raccords, soudures et supports et dont les opérations de maintenance sont rendues compliquées du fait de la conception même des composants ainsi que de la disparité des dispositifs de distribution ou de régulation.

La présente invention a notamment pour but de résoudre l'inconvénient précité en proposant un système de distribution et de régulation construit à partir d'un kit, lui-même basé sur un module spécifique, pour pouvoir proposer un système peu encombrant, fiable, sûr, facile à maintenir et à entretenir et simple à utiliser.

Un autre but de l'invention est de pouvoir garantir la confidentialité de l'architecture du système de distribution et de régulation, propre à chaque constructeur de station de distribution d'hydrogène gazeux, et ainsi permettre de ne pas dévoiler son savoir-faire.

A cet effet, elle propose un module pour un kit de distribution et de régulation d'un gaz sous pression, ce module comprenant un corps principal ayant une forme générale parallélépipédique et présentant quatre faces latérales deux à deux parallèles et s'étendant entre une face supérieure et une face inférieure parallèles entre elles,
dans lequel une chambre interne est ménagée dans le corps principal en le traversant pour déboucher dans la face supérieure et dans la face inférieure, ladite chambre interne étant prévue pour recevoir intérieurement un dispositif de distribution ou de régulation prévu pour une distribution ou une régulation d'un gaz passant dans la chambre interne, ladite chambre interne comprenant successivement :
- un alésage supérieur cylindrique débouchant dans la face supérieure,
- un alésage intermédiaire cylindrique ayant un diamètre intérieur qui est inférieur au diamètre intérieur de l'alésage supérieur, et
- un alésage inférieur cylindrique débouchant dans la face inférieure et ayant un diamètre intérieur qui est inférieur au diamètre intérieur de l'alésage intermédiaire,
et dans lequel sur chaque face latérale est prévue une platine adaptée pour une fixation sur une platine d'un module adjacent similaire, où ladite platine présente des trous périphériques servant au passage de vis de fixation et un trou central borgne, en particulier adapté pour guider un perçage débouchant dans l'alésage supérieur ou dans l'alésage intermédiaire de la chambre interne

Un tel module, comme expliqué ultérieurement, va permettre de construire un système de distribution et de régulation :
- en associant chaque module à une fonction (pour ce faire un dispositif de distribution ou de régulation est monté dans la chambre interne du corps principal du module),
- en perçant les corps principaux pour ménager au moins un canal d'entrée et au moins un canal de sortie débouchant à la fois dans la chambre interne du corps principal et dans des trous centraux des platines, ces trous centraux définissant alors respectivement au moins une entrée et au moins une sortie du module ; et
- en accouplant les platines des modules entre elles pour relier les entrées et sorties des modules entre elles, et ainsi mettre en communication les dispositifs de distribution ou de régulation montés sur les différents modules.

Grâce à de tels modules, il est possible de construire de manière aisée un système de distribution et de régulation selon un circuit prédéfini et avec des fonctions prédéfinies réparties le long du circuit, et ultérieurement de remplacer ou modifier une fonction selon les besoins, voire de réassembler les modules entre eux selon une nouvelle configuration.

Il est bien entendu, au sens de l'invention, que le module peut être proposé sans le(s) perçage(s), dans la mesure où le module peut être « universel » en étant utilisable dans de multiples configurations, et le ou les perçages seront effectués en fonction de l'utilisation du module qui est retenu.

Selon une caractéristique, des trous taraudés sont ménagés dans la face supérieure pour la fixation d'un étrier solidaire du dispositif de distribution ou de régulation.

Ainsi, le dispositif de distribution ou de régulation est fixé sur le module au moyen d'un étrier vissé sur la face supérieure du corps principal, pour maintenir en place et de manière étanche le dispositif de distribution ou de régulation à l'intérieur de la chambre interne du corps principal.

Selon une variante, le module est constitué du corps principal qui est réalisé d'un seul tenant.

L'invention se rapporte également à un kit de distribution et de régulation d'un gaz sous pression, où le kit comprend :
- plusieurs modules conformes à l'invention, où tous les modules sont identiques ; et
- plusieurs dispositifs de distribution ou de régulation prévus pour une distribution ou une régulation d'un gaz passant dans les chambres internes des corps principaux des modules ;
   dans lequel chaque dispositif de distribution ou de régulation comprend une cartouche formée d'un corps tubulaire adapté pour être reçu à l'intérieur d'une chambre interne de n'importe lequel des modules, où cette cartouche comprend successivement :
- un premier manchon supérieur cylindrique supportant au moins un joint torique et prévu pour être monté de manière étanche dans l'alésage supérieur ;
- un second manchon supérieur cylindrique ayant un diamètre extérieur qui est, d'une part, inférieur au diamètre intérieur de l'alésage supérieur et au diamètre extérieur du premier manchon supérieur et, d'autre part, supérieur au diamètre intérieur de l'alésage intermédiaire, ledit second manchon supérieur présentant au moins un trou supérieur traversant et débouchant dans une chambre supérieure délimitée au moins partiellement par le second manchon supérieur,
- un premier manchon intermédiaire cylindrique supportant au moins un joint torique et prévu pour être monté de manière étanche dans l'alésage intermédiaire, ledit premier manchon intermédiaire ayant un diamètre extérieur qui est inférieur au diamètre extérieur du second manchon supérieur ;
- un second manchon intermédiaire cylindrique ayant un diamètre extérieur qui est, d'une part, inférieur au diamètre intérieur de l'alésage intermédiaire et au diamètre extérieur du premier manchon intermédiaire et, d'autre part, supérieur au diamètre intérieur de l'alésage inférieur, ledit second manchon intermédiaire présentant au moins un trou intermédiaire traversant et débouchant dans une chambre intermédiaire délimitée au moins partiellement par le second manchon intermédiaire, et
- un manchon inférieur cylindrique ayant un diamètre extérieur qui est inférieur au diamètre extérieur du second manchon intermédiaire, où ledit manchon inférieur supporte au moins un joint torique et est prévu pour être monté de manière étanche dans l'alésage inférieur.

Ainsi, chaque dispositif de distribution ou de régulation présente la même cartouche, autrement dit une cartouche de même géométrie, même forme et mêmes dimensions, qui va permettre une intégration des différentes fonctions sur n'importe lequel des modules, chaque module ayant la même chambre interne, autrement dit une chambre interne de même géométrie, même forme et mêmes dimensions.

Dans une réalisation particulière, au moins un dispositif de distribution ou de régulation comprend, à l'intérieur de la cartouche, un clapet mobile relativement à un siège entre une position de fermeture de la communication entre la chambre intermédiaire et la chambre supérieure et une position d'ouverture de la communication entre la chambre intermédiaire et la chambre supérieure.

Selon une première possibilité, les dispositifs de distribution ou de régulation comprennent au moins un détendeur comprenant les organes régulateurs suivants :
- un piston monté coulissant à l'intérieur du second manchon intermédiaire dans la chambre intermédiaire formant une chambre amont, où ledit piston présente une extrémité supérieure formant le clapet et une extrémité inférieure entourée d'un joint torique et coulissant à l'intérieur du manchon inférieur dans un orifice inférieur non débouchant extérieurement ;
- un corps aval monté statique à l'intérieur du second manchon supérieur et délimitant la chambre supérieure formant une chambre avale (à la pression détendue), où ledit corps aval présente un trou central définissant le siège formant un siège de détente apte à coopérer avec le clapet ;
- un organe de rappel élastique sollicitant le piston et le clapet dans le sens de la position de fermeture, de manière opposée à une pression réduite dans la chambre avale qui sollicite le piston et le clapet dans le sens de la position d'ouverture ;
- un bouchon supérieur monté statique à l'intérieur du premier manchon supérieur ;
- un poussoir traversant le bouchon supérieur et apte à exercer un effort sur le clapet dans le sens de la position d'ouverture ;
   dans lequel le piston présente un canal interne traversant ayant deux extrémités opposées comprenant, d'une part, une extrémité supérieure ouverte du côté du corps aval et formant un siège de décharge et, d'autre part, une extrémité inférieure ouverte dans l'orifice inférieur du manchon inférieur, et où le poussoir est apte à venir en appui sur le siège de décharge pour le boucher
   et dans lequel le détendeur comprend en outre :
- un étrier fixé sur la cartouche et muni d'éléments de fixation pour la fixation du détendeur sur la face supérieure de n'importe lequel des modules, où l'étrier intègre un piston de poussée monté coulissant et propre à venir en appui sur le poussoir, ce piston de poussée dépassant de l'étrier ; et
- un système de réglage monté sur l'étrier et agissant sur le piston de poussée et ainsi sur le poussoir pour autoriser un réglage d'une force d'ouverture du clapet requise pour détendre la pression.

Un tel détendeur est ainsi particulièrement adapté à la géométrie de la cartouche, et donc à la géométrie de la chambre interne d'un module.

Dans une première réalisation du détendeur, le système de réglage est un système de réglage mécanique comprenant un support fixé sur l'étrier et supportant intérieurement un organe de rappel élastique comprimé entre une portée inférieure sur laquelle prend appui le piston de poussée et une portée supérieure réglable mécaniquement en position afin de permettre un réglage de l'effort de poussée exercée par l'organe de rappel élastique sur le piston de poussée.

Dans une deuxième réalisation du détendeur, le système de réglage est un système de réglage pneumatique comprenant un support fixé sur l'étrier et recevant intérieurement un piston principal plein monté étanche et coulissant dans le support, où ce piston principal agit sur le piston de poussée et est soumis à une source de pression de pilotage afin de permettre un réglage de l'effort de poussée exercée par ce piston principal sur le piston de poussée.

Avantageusement, le système de réglage mécanique et le système de réglage pneumatique sont interchangeables en présentant chacun un support monté de manière amovible sur un même étrier.

Ainsi, l'étrier étant identique, il suffit de démonter hors de l'étrier le système de réglage mécanique pour le remplacer par le système de réglage pneumatique, ou inversement.

Dans une réalisation particulière, le piston principal présente :
- une section supérieure offrant une surface supérieure sur laquelle agit la pression de pilotage ; et
- une section inférieure offrant une surface inférieure agissant sur le piston de poussée, où ladite surface inférieure présente une superficie inférieure à la surface supérieure.

Avantageusement, le système de réglage pneumatique comprend au moins un étage secondaire comprenant un corps secondaire tubulaire rapporté de manière étanche sur le support et un piston secondaire monté étanche et coulissant à l'intérieur du corps secondaire, où le corps secondaire présente :
- une portion supérieure délimitant une cavité supérieure cylindrique ; et
- une portion inférieure traversée par un trou central ayant un diamètre réduit comparativement à la cavité supérieure ;
   et où le piston secondaire présente :
- une section supérieure offrant une surface supérieure sur laquelle agit la pression de pilotage et montée étanche dans la cavité supérieure de la portion supérieure du corps secondaire ; et
- une section inférieure offrant une surface inférieure venant en appui sur la surface supérieure du piston principal et montée étanche dans le trou central de la portion inférieure du corps secondaire, où ladite surface inférieure du piston secondaire présente une superficie inférieure à la surface supérieure du piston secondaire ;

et dans lequel le piston secondaire est muni d'un canal interne traversant et débouchant dans sa surface inférieure et dans sa surface supérieure, de sorte que la pression de pilotage s'applique sur la surface supérieure du piston principal en passant dans ledit canal interne.

Ainsi, un tel étage secondaire, qui peut être répété, permet d'introduire un rapport de démultiplication entre la pression de pilotage et l'effort exercé par le piston principal sur le piston de poussée, ce qui offre la possibilité de travailler avec une pression de pilotage réduite tout en proposant un encombrement vertical limité. Il est à noter qu'un tel détendeur intégrant un tel système de réglage pneumatique ou à dôme avec au moins un étage secondaire peut être envisagé dans un autre contexte que le présent contexte d'un kit de distribution et de régulation.

Selon une deuxième possibilité, les dispositifs de distribution ou de régulation comprennent au moins une vanne de sectionnement comprenant les organes régulateurs suivants :
- un piston monté coulissant à l'intérieur du second manchon intermédiaire dans la chambre intermédiaire formant une chambre amont, où ledit piston présente une extrémité supérieure formant le clapet et une extrémité inférieure entourée d'un joint torique et coulissant à l'intérieur du manchon inférieur dans un orifice inférieur débouchant extérieurement ;
- un corps aval monté statique à l'intérieur du second manchon supérieur et délimitant la chambre supérieure formant une chambre avale, où ledit corps aval présente un trou central définissant le siège coopérant avec le clapet ;
- un organe de rappel élastique sollicitant le piston et le clapet dans le sens de la position de fermeture ;
- un bouchon supérieur monté statique à l'intérieur du premier manchon supérieur ;
- un poussoir traversant de manière étanche le bouchon supérieur et apte à exercer un effort sur le clapet dans le sens de la position d'ouverture ;
   et dans lequel la vanne de sectionnement comprend en outre :
- un étrier solidaire du bouchon supérieur et muni d'éléments de fixation pour la fixation de la vanne de sectionnement sur la face supérieure de n'importe lequel des modules ; et
- un actionneur monté sur l'étrier et agissant sur le poussoir pour contrôler la position relative du clapet vis-à-vis du siège entre la position de fermeture et la position d'ouverture.

Une telle vanne de sectionnement est ainsi particulièrement adaptée à la géométrie de la cartouche, et donc à la géométrie de la chambre interne d'un module.

Dans un mode de réalisation particulier, la vanne de sectionnement comprend un actionneur choisi parmi les actionneurs suivants :
- un actionneur manuel comprenant une molette solidaire d'un organe de poussée vissé dans l'étrier et propre à venir en appui sur le poussoir ;
- un actionneur pneumatique comprenant un support fixé sur l'étrier et traversé par un piston de poussée propre à venir en appui sur le poussoir sous la sollicitation d'une source de pression de contrôle ;
- un actionneur électrique comprenant un support fixé sur l'étrier et traversé par un organe de poussée propre à venir en appui sur le poussoir sous la sollicitation d'un moteur électrique.

Selon une caractéristique, les actionneurs de la vanne de sectionnement sont interchangeables, chaque vanne de sectionnement ayant les mêmes organes régulateurs et le même étrier, où ledit étrier comprend un orifice taraudé à l'intérieur duquel peuvent être vissés l'organe de poussée de l'actionneur manuel, le support de l'actionneur pneumatique et le support de l'actionneur électrique.

Ainsi, il est possible de remplacer aisément un type d'actionneur par un autre type d'actionneur, voire de remplacer un actionneur défaillant par un nouveau actionneur dans le cadre d'une opération de maintenance ou de réparation.

Selon une troisième possibilité, les dispositifs de distribution ou de régulation comprennent au moins un dispositif d'isolation de non-retour comprenant les organes suivants :
- un piston monté coulissant à l'intérieur du premier manchon supérieur dans la chambre supérieure formant une chambre avale, où ledit piston présente une extrémité inférieure formant le clapet ;
- un corps aval monté statique à l'intérieur du second manchon supérieur et délimitant la chambre supérieure et la chambre intermédiaire formant une chambre amont, où ledit corps aval présente un trou central définissant le siège coopérant avec le clapet soumis à la pression du gaz dans la chambre intermédiaire dans le sens d'un décollement vis-à-vis du siège ;
- un organe de rappel élastique sollicitant le piston et le clapet dans le sens de la position de fermeture ;
et dans lequel le dispositif d'isolation de non-retour comprend en outre un étrier muni d'éléments de fixation pour la fixation du dispositif d'isolation de non-retour sur la face supérieure de n'importe lequel des modules, ledit étrier formant un couvercle clos de sorte que ledit organe de rappel élastique vient en appui sur ledit étrier.

Selon une quatrième possibilité, les dispositifs de distribution ou de régulation comprennent au moins un dispositif de filtration comprenant une cartouche filtrante réceptionnée à l'intérieur de la chambre supérieure et ayant une entrée débouchant dans la chambre intermédiaire, et dans lequel le dispositif de filtration comprend en outre un étrier muni d'éléments de fixation pour la fixation du dispositif de filtration sur la face supérieure de n'importe lequel des modules, ledit étrier formant un couvercle clos.

La présente invention concerne également un système de distribution et de régulation d'un gaz sous pression, formé au moins en partie à partir d'un kit de distribution et de régulation selon l'invention, dans lequel :
- des modules sont accouplés par fixation d'au moins une platine d'un module sur une platine d'au moins un module adjacent, mettant en communication les trous centraux des platines fixées ensemble ;
- des dispositifs de distribution ou de régulation sont fixés sur les corps principaux de tout ou partie des modules, avec leurs cartouches reçues à l'intérieur des chambres internes ;
- des perçages sont ménagés dans les trous centraux des platines qui sont fixées à une autre platine, de tels perçages formant des canaux de communication débouchant dans l'alésage supérieur ou dans l'alésage intermédiaire de la chambre interne du module concerné afin de mettre en communication les dispositifs de distribution ou de régulation des modules accouplés.

L'invention se rapporte aussi à une station de distribution d'hydrogène gazeux pour le remplissage d'un réservoir de pile à combustible, cette station distribution d'hydrogène gazeux comprenant au moins un système de distribution et de régulation telle que décrite ci-dessus.

D'autres caractéristiques et avantages de la présente invention apparaîtront à la lecture de la description détaillée ci-après, d'exemples de mise en œuvre non limitatifs, faite en référence aux figures annexées dans lesquelles :
- la figure 1 est une vue schématique en perspective d'un module selon l'invention ;
- les figures 2 et 3 sont des vues schématiques respectivement de dessus et de côté du module de la figure 1 ;
- les figures 4 et 5 sont des vues schématiques en coupe transversale du module de la figure 1, selon un plan de coupe perpendiculaire à l'une des faces latérales et à la face supérieure, dans la réalisation brute sans les perçages formant des canaux de communication (figure 4) et dans un exemple de réalisation avec des perçages formant des canaux de communication (figure 5) ;
- la figure 6 est une vue schématique en coupe du module de la figure 1, selon un plan de coupe parallèle à la face supérieure, dans dix exemples de configuration d'aménagement des perçages formant des canaux de communication ;
- les figures 7 et 8 sont des vues schématiques de dessus de plusieurs modules accouplés dans deux configurations distinctes, pour former des systèmes de distribution et de régulation selon l'invention ;
- la figure 9 est une vue schématique de côté d'une cartouche pour un dispositif de distribution ou de régulation adapté à un kit ou système de distribution et de régulation selon l'invention ;
- les figures 10 et 11 sont des vues schématiques en coupe transversale de la cartouche de la figure 9, dans une réalisation avec l'orifice inférieur non débouchant extérieurement (figure 10) et dans une réalisation avec l'orifice inférieur débouchant extérieurement (figure 11) ;
- la figure 12 est une vue schématique de côté d'un dispositif de distribution ou de régulation de type détendeur à système de réglage mécanique ;
- la figure 13 est une vue en coupe transversale du détendeur à système de réglage mécanique de la figure 12, en place dans un module conforme à la figure 5 ;
- la figure 14 est une vue schématique de côté d'un dispositif de distribution ou de régulation de type détendeur à système de réglage pneumatique ou à dôme ;
- la figure 15 est une vue en coupe transversale du détendeur à système de réglage pneumatique de la figure 14, en place dans un module conforme à la figure 5 ;
- la figure 16 est une vue en coupe transversale du détendeur à système de réglage pneumatique de la figure 14, seul et selon un plan de coupe différent de celui de la figure 15 ;
- la figure 17 est une vue schématique de côté d'un dispositif de distribution ou de régulation de type vanne de sectionnement à actionneur manuel ;
- la figure 18 est une vue en coupe transversale de la vanne de sectionnement à actionneur manuel de la figure 17, en place dans un module conforme à la figure 5 ;
- la figure 19 est une vue schématique de côté d'un dispositif de distribution ou de régulation de type vanne de sectionnement à actionneur pneumatique ;
- la figure 20 est une vue en coupe transversale de la vanne de sectionnement à actionneur pneumatique de la figure 19, en place dans un module conforme à la figure 5 ;
- la figure 21 est une vue schématique en coupe transversale d'un dispositif de distribution ou de régulation de type vanne de sectionnement à actionneur électrique, en place dans un module conforme à la figure 5 ;

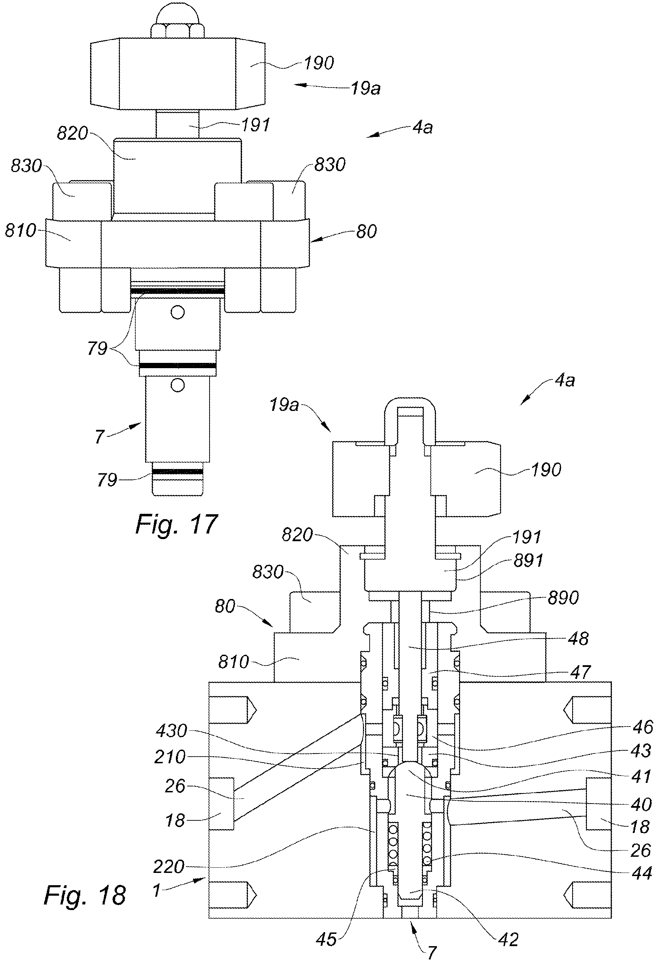

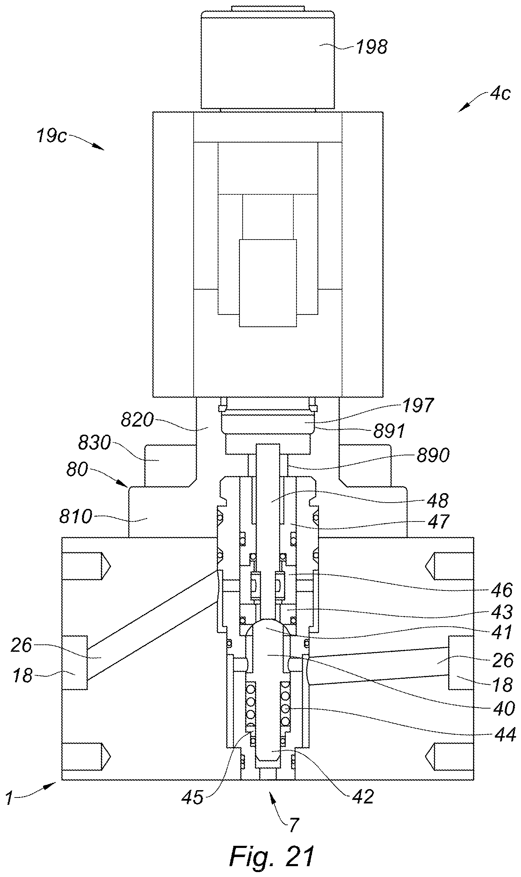

- la figure 21 est une vue schématique illustrant l'interchangeabilité des actionneurs manuel, pneumatique et électrique pour les vannes de sectionnement des figures 17 à 21 ;

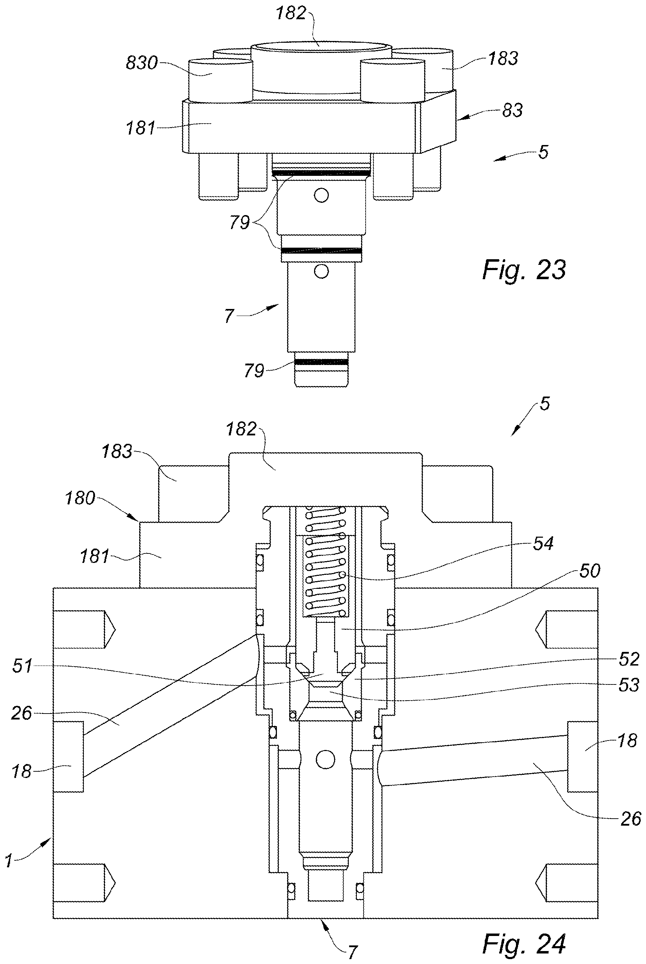

- la figure 23 est une vue schématique de côté d'un dispositif de distribution ou de régulation de type dispositif d'isolation de non-retour ;

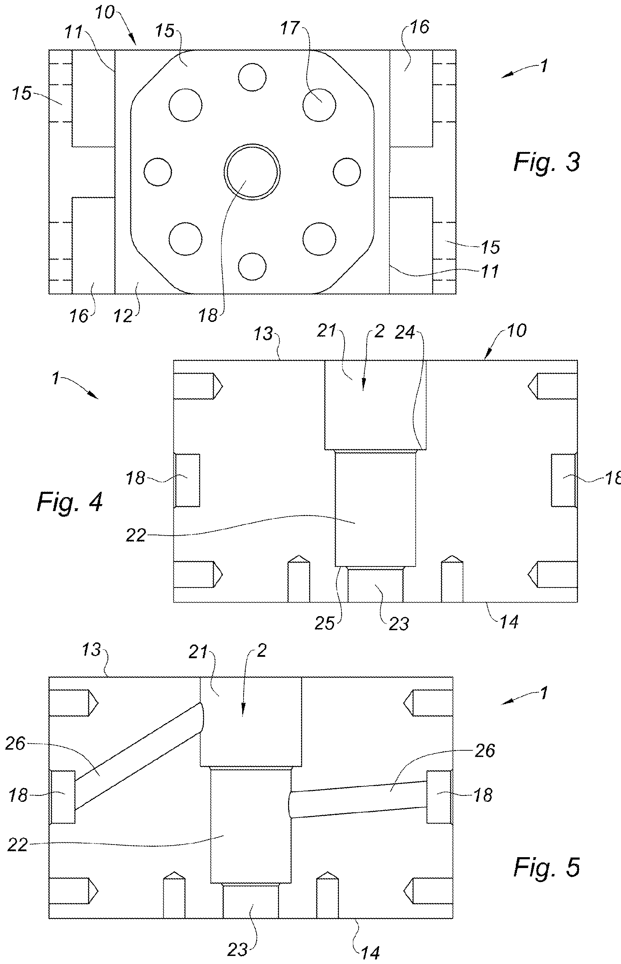

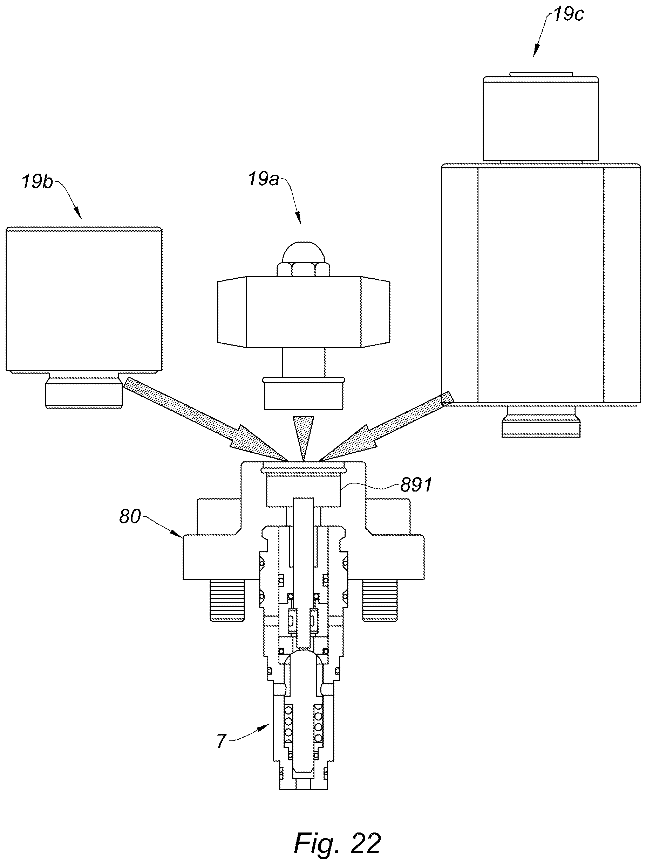

- la figure 24 est une vue en coupe transversale du dispositif d'isolation de non-retour de la figure 22, en place dans un module conforme à la figure 5 ;

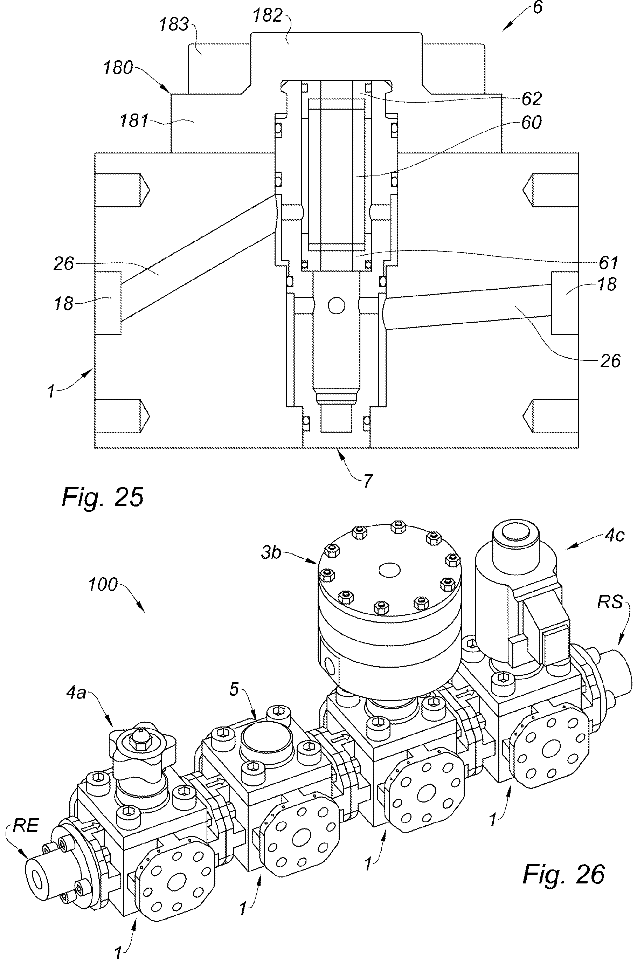

- la figure 25 est une vue en coupe transversale d'un dispositif de distribution ou de régulation de type dispositif de filtration, en place dans un module conforme à la figure 5 ;

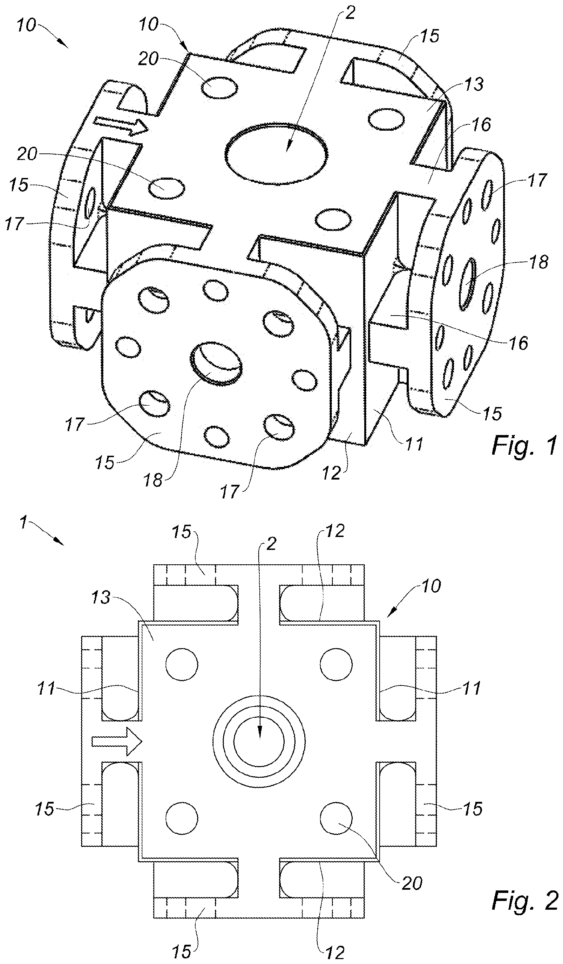

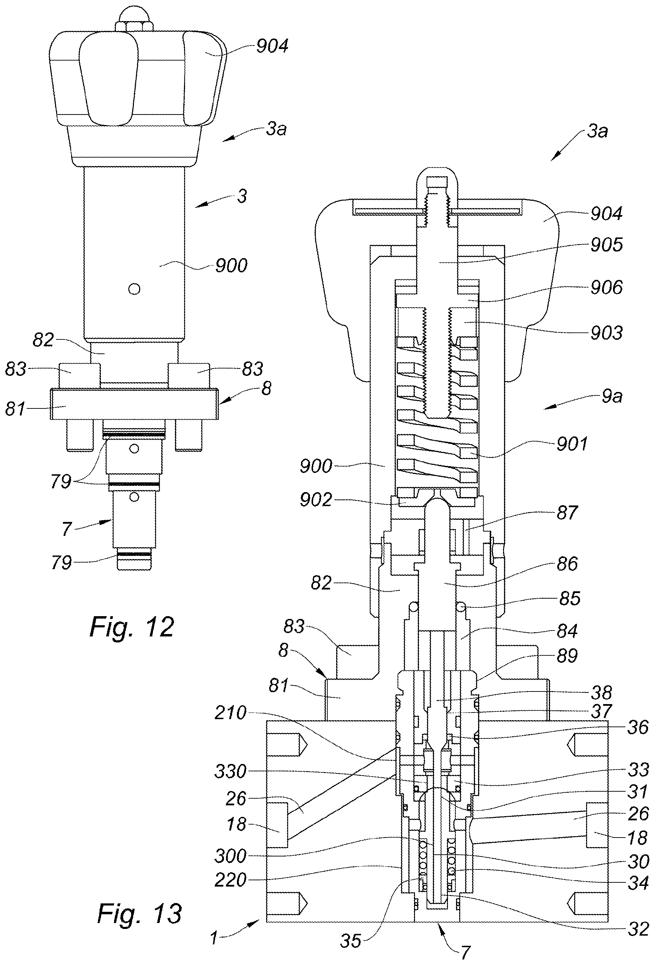

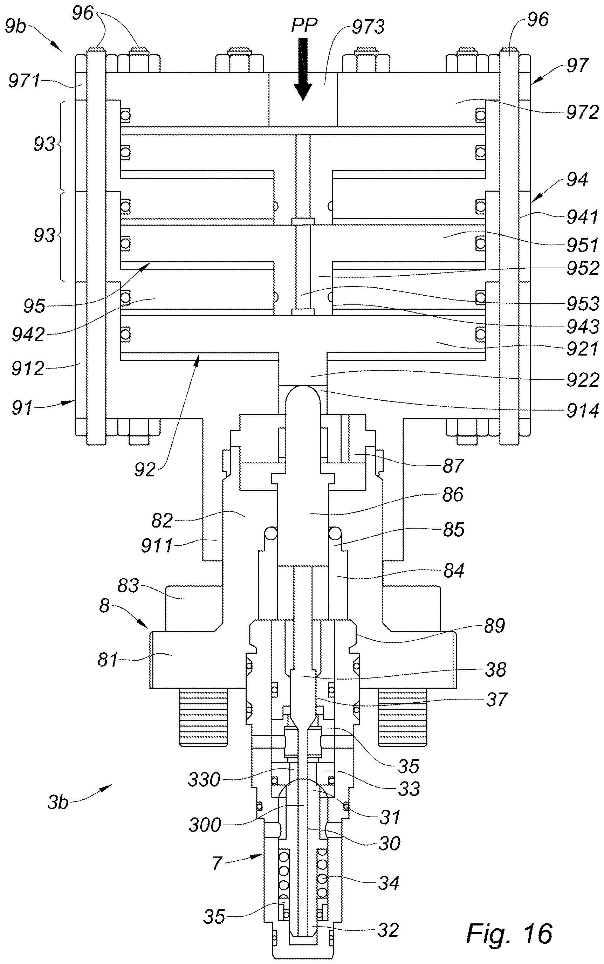

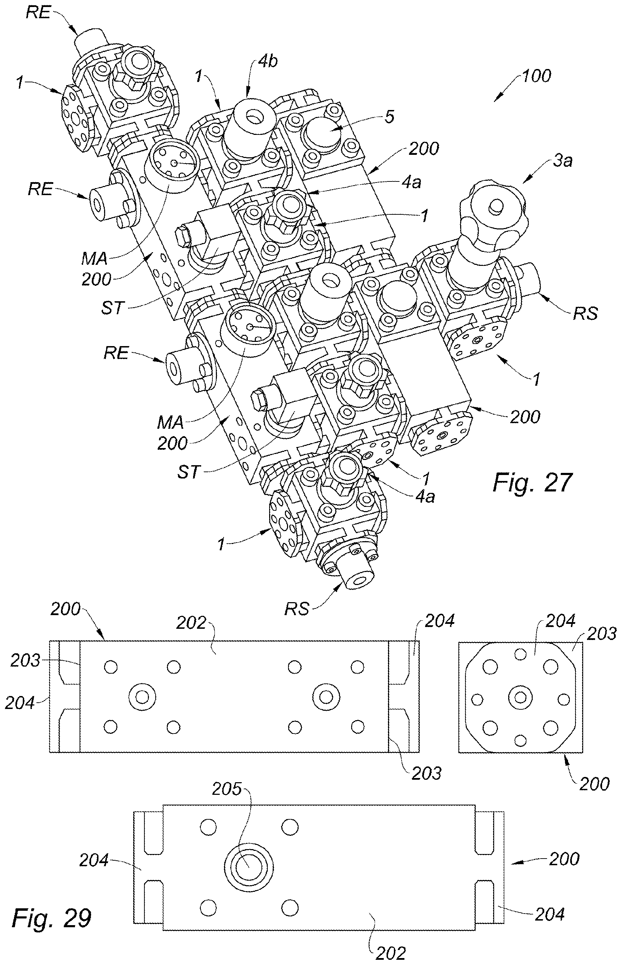

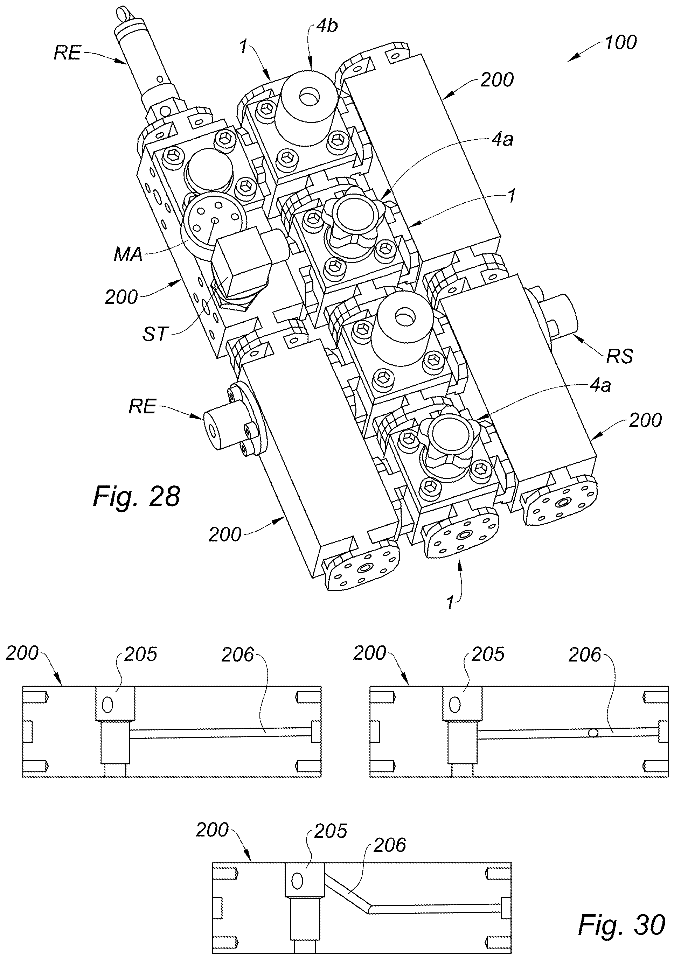

- les figures 26 à 28 sont des vues schématiques en perspectives de trois exemples de réalisation de systèmes de distribution et de régulation employant des modules selon les figures 1 à 5 et des dispositifs de distribution ou de régulation selon les figures 12 à 25, ainsi que des collecteurs dans les exemples des figures 27 et 28 ;
- la figure 29 comprend des vues schématiques de côté, de face et de dessus d'un collecteur employé des les systèmes de distribution et de régulation des figures 27 et 28 ; et
- la figure 30 comprend des vues schématiques en coupe transversale du collecteur de la figure 29 dans trois exemples de configurations de perçages internes.

En référence aux figures 1 à 5, un module 1, conforme à un exemple de réalisation de l'invention, est formé d'une pièce monobloc en matériau métallique qui comprend un corps principal 10 qui a une forme générale parallélépipédique et plus spécifiquement cubique.

Ce corps principal 10 présente :
- quatre faces latérales 11, 12 deux à deux parallèles, c'est-à-dire deux premières faces latérales 11 parallèles entre elles et deux secondes faces latérales 12 parallèles entre elles et perpendiculaires aux premières faces latérales 11, et
- une face supérieure 13 et une face inférieure 14 parallèles entre elles, les quatre faces latérales 11, 12 s'étendant entre la face supérieure 13 et la face inférieure 14.

En outre, sur chaque face latérale 11, 12 est prévue une platine 15 parallèle à la face latérale 11, 12 correspondante et espacée de celle-ci, où la platine 15 est reliée à la face latérale 11, 12 correspondante par des nervures 16. Toutes les platines 15 sont identiques de par leurs formes et leurs dimensions.

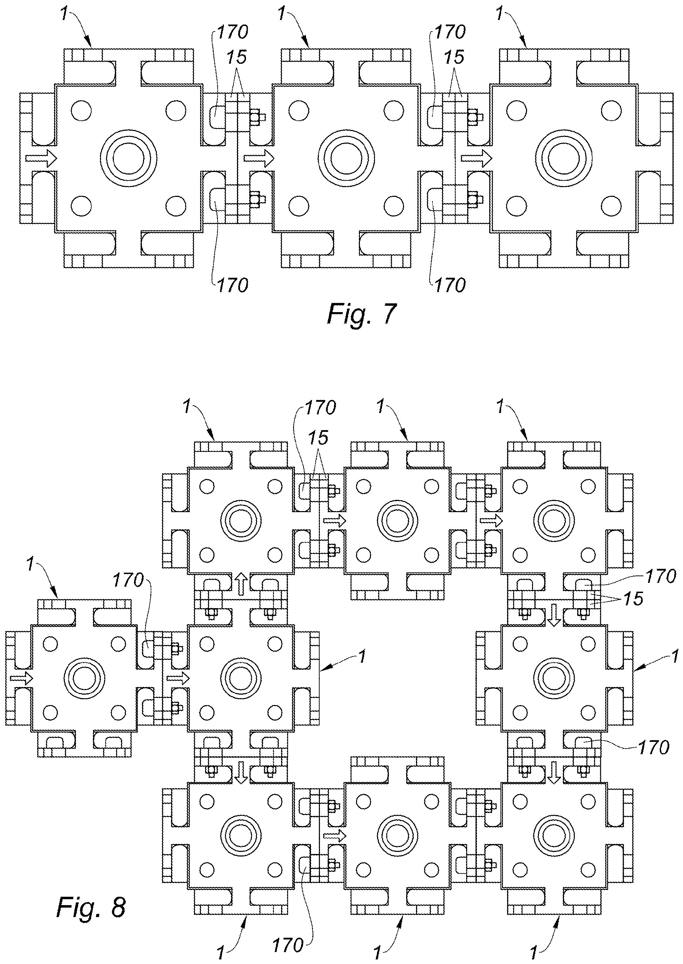

Chaque platine 15 est adaptée pour une fixation sur une platine 15 d'un autre module 1 et, à cet effet, chaque platine 15 présente des trous périphériques 17 traversant servant au passage de plusieurs vis de fixation 170 coopérant avec des écrous pour une fixation par boulonnage des deux platines 15, ainsi qu'illustré sur les figures 7 et 8. Dans l'exemple illustré, les trous périphériques 17 sont au nombre de quatre.

Chaque platine 15 présente également en son centre un trou central 18 borgne qui sert de point d'entrée, voire de guidage, pour un perçage qui débouchera dans une chambre interne 2 décrite ci-dessous.

Le module 1 présente donc une chambre interne 2 qui est ménagée dans le corps principal 10 en le traversant pour déboucher dans la face supérieure 13 et dans la face inférieure 14. Cette chambre interne 2 est ménagée au centre de la face supérieure 13 et est prévue pour recevoir intérieurement un dispositif de distribution ou de régulation 3a, 3b, 4a, 4b, 4c, 5, 6 (décrit ultérieurement), ce dispositif de distribution ou de régulation 3a, 3b, 4a, 4b, 4c, 5, 6 étant prévu pour une distribution ou une régulation d'un gaz passant dans la chambre interne 2.

Comme visible sur les figures 4 et 5, cette chambre interne 2 comprend successivement :
- un alésage supérieur 21 cylindrique et lisse, débouchant dans la face supérieure 13 et ayant un diamètre intérieur D1,
- un alésage intermédiaire 22 cylindrique et lisse ayant un diamètre intérieur D2 inférieur au diamètre intérieur D1 de l'alésage supérieur 21, et
- un alésage inférieur 23 cylindrique et lisse, débouchant dans la face inférieure 14 et ayant un diamètre intérieur D3 inférieur au diamètre intérieur D2 de l'alésage intermédiaire 22.

Ainsi, cette chambre interne 2 présente :
- un épaulement interne supérieur 24 entre l'alésage supérieur 21 et l'alésage intermédiaire 22 ; et
- un épaulement interne inférieur 25 entre l'alésage intermédiaire 22 et l'alésage inférieur 23.

Des trous taraudés 20 borgnes sont ménagés dans la face supérieure 13 pour la fixation d'un étrier 8, 80 ou 180 (décrit ultérieurement) du dispositif de distribution ou de régulation 3a, 3b, 4a, 4b, 4c, 5, 6. Dans l'exemple illustré, les trous taraudés 20 sont au nombre de quatre.

Pour son utilisation, et comme illustré sur la figure 5, le module 1 doit faire l'objet d'au moins deux perçages 26, chaque perçage démarrant dans un trou central 18 pour déboucher dans la chambre interne 2, et plus spécifiquement dans l'alésage supérieur 21 ou dans l'alésage intermédiaire 22.

En fonction du dispositif de distribution ou de régulation 3a, 3b, 4a, 4b, 4c, 5, 6, deux configurations sont envisageables :
- l'alésage supérieur 21 est en communication avec une chambre amont (ou chambre d'entrée du gaz) du dispositif de distribution ou de régulation 3a, 3b, 4a, 4b, 4c, 5, 6 et l'alésage intermédiaire 22 est en communication avec une chambre avale (ou chambre de sortie du gaz) du dispositif de distribution ou de régulation 3a, 3b, 4a, 4b, 4c, 5, 6 ; ou inversement
- l'alésage supérieur 21 est en communication avec une chambre avale (ou chambre de sortie du gaz) du dispositif de distribution ou de régulation 3a, 3b, 4a, 4b, 4c, 5, 6 et l'alésage intermédiaire 22 est en communication avec une chambre amont (ou chambre d'entrée du gaz) du dispositif de distribution ou de régulation 3a, 3b, 4a, 4b, 4c, 5, 6.

Ainsi, si le perçage 26 débouche dans un alésage 21 ou 22 en communication avec une chambre amont alors le trou central 18 correspondant forme une entrée « E » du module 1, tandis que si le perçage 26 débouche dans un alésage 21 ou 22 en communication avec une chambre avale alors le trou central 18 correspondant forme une sortie « S » du module 1. Sur chaque platine 15, il ne peut y avoir qu'une seule entrée « E », ou qu'une seule sortie « S », ou ni entrée ni sortie.

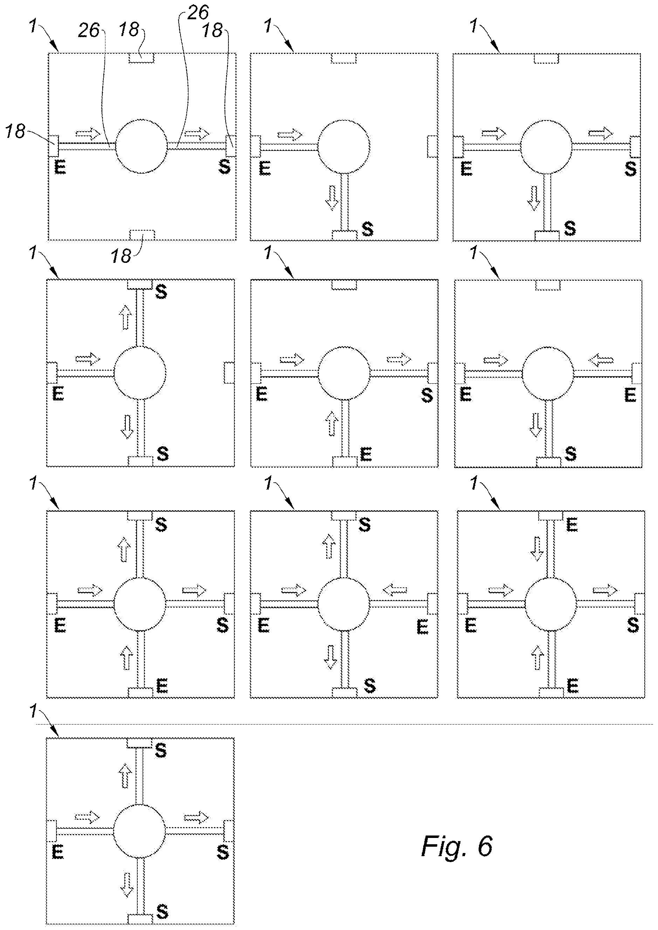

La figure 6 illustre dix configurations distinctes de module 1 dans la réalisation des perçages 26 et donc dans la distribution de la ou des entrées « E » et de la ou des sorties « S » :
- la configuration à gauche dans la première ligne (en partant du haut) correspond à une configuration avec une unique entrée « E » et une unique sortie « S » qui sont à 180° l'une de l'autre, c'est-à-dire que l'entrée « E » et la sortie « S » correspondent à des trous centraux 18 de deux platines 15 parallèles ;
- la configuration au milieu dans la première ligne correspond à une configuration avec une unique entrée « E » et une unique sortie « S » qui sont à 90° l'une de l'autre, c'est-à-dire que l'entrée « E » et la sortie « S » correspondent à des trous centraux 18 de deux platines 15 orthogonales ;
- la configuration à droite dans la première ligne correspond à une configuration avec une unique entrée « E » et deux sorties « S » qui sont respectivement à 90° et à 180° vis-à-vis de l'entrée « E », les deux sorties « S » étant à 90° l'une de l'autre ;

- la configuration à gauche dans la deuxième ligne correspond à une configuration avec une unique entrée « E » et deux sorties « S » qui sont toutes deux à 90° vis-à-vis de l'entrée « E », les deux sorties « S » étant à 180° l'une de l'autre ;
- la configuration au milieu dans la deuxième ligne correspond à une configuration avec deux entrées « E » et une sortie « S », les deux entrées « E » étant à 90° l'une de l'autre ;
- la configuration à droite dans la deuxième ligne correspond à une configuration avec deux entrées « E » et une sortie « S », les deux entrées « E » étant à 180° l'une de l'autre ;
- la configuration à gauche dans la troisième ligne correspond à une configuration avec deux entrées « E » et deux sorties « S », les deux entrées « E » étant à 90° l'une de l'autre et les deux sorties « S » étant à 90° l'une de l'autre ;
- la configuration au milieu dans la troisième ligne correspond à une configuration avec deux entrées « E » et deux sorties « S », les deux entrées « E » étant à 180° l'une de l'autre et les deux sorties « S » étant à 180° l'une de l'autre ;
- la configuration à droite dans la troisième ligne correspond à une configuration avec trois entrées « E » et une unique sortie « S » ;
- la seule configuration dans la quatrième ligne correspond à une configuration avec une unique entrée « E » et trois sorties « S ».

Ainsi, un module 1 peut être accouplé avec un, deux ou trois autres modules 1, avec des accouplements entrée-sortie ou sortie-entrée selon le sens d'écoulement du gaz souhaité dans les différents dispositifs de distribution ou de régulation 3a, 3b, 4a, 4b, 4c, 5, 6 reçus dans les modules 1. En effet, quand deux modules 1 sont accouplés, les trous centraux 18 des platines 15 fixées ensemble sont mis en communication.

La suite de la description porte sur les dispositifs de distribution ou de régulation 3a, 3b, 4a, 4b, 4c, 5, 6 et sur leurs intégrations dans les modules 1.

Un dispositif de distribution ou de régulation 3a, 3b, 4a, 4b, 4c, 5, 6 est prévu pour une distribution ou une régulation d'un gaz passant dans la chambre interne 2 du corps principal 10 du module 1 sur lequel il est fixé.

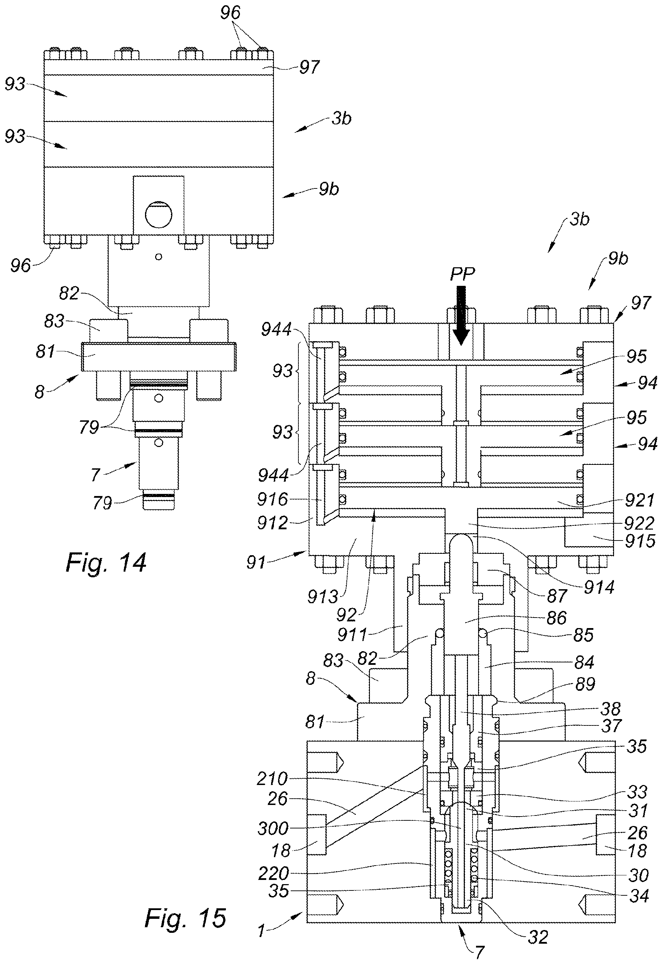

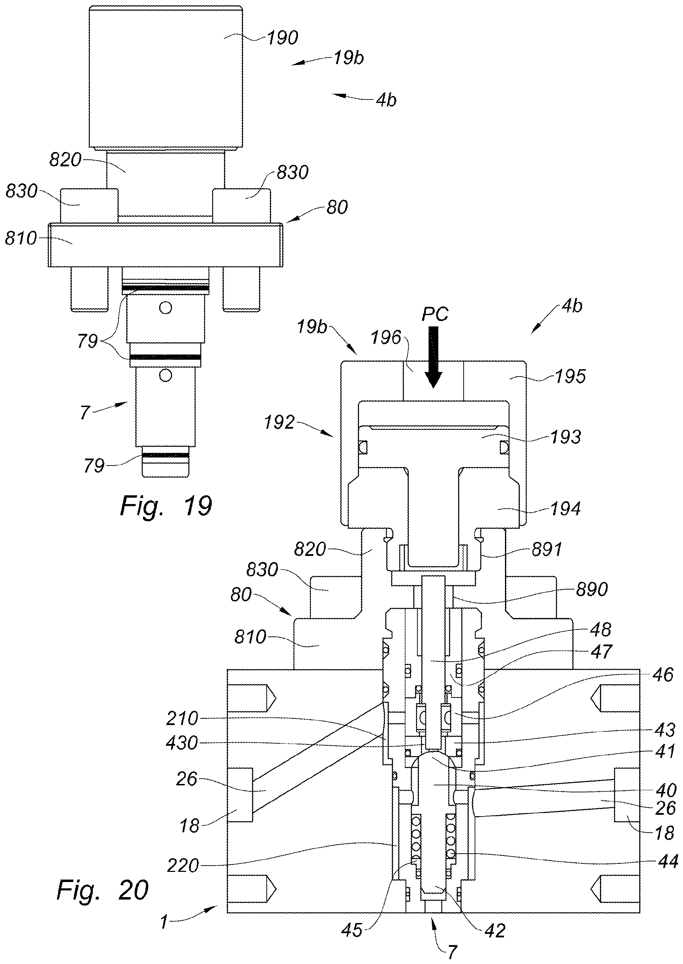

Les sept exemples suivants de dispositif de distribution ou de régulation 3a, 3b, 4a, 4b, 4c, 5, 6 feront l'objet d'une description :
- un détendeur à réglage mécanique 3a illustré sur les figures 12 et 13 ;
- un détendeur à réglage pneumatique 3b (ou détendeur à dôme) illustré sur les figures 14 à 16 ;
- une vanne de sectionnement à actionneur manuel 4a illustrée sur les figures 17 et 18 ;
- une vanne de sectionnement à actionneur pneumatique 4b illustrée sur les figures 19 et 20 ;
- une vanne de sectionnement à actionneur électrique 4c (ou électrovanne) illustrée sur la figure 21 ;
- un dispositif d'isolation de non-retour 5 illustré sur les figures 23 et 24 ; et
- un dispositif de filtration 6 illustré sur la figure 25.

Chaque dispositif de distribution ou de régulation 3a, 3b, 4a, 4b, 4c, 5, 6 comprend une cartouche 7 formée d'un corps tubulaire adapté pour être reçu à l'intérieur d'une chambre interne 2 de n'importe lequel des modules 1. Cette cartouche 7 est universelle dans la mesure où elle est identique à l'ensemble des dispositifs de distribution ou de régulation 3a, 3b, 4a, 4b, 4c, 5, 6, à l'exception d'une seule différence quant au caractère débouchant ou non débouchant d'un orifice inférieur (décrit ultérieurement).

Cette cartouche 7 comprend successivement :
- un embout supérieur 70 présentant un filetage externe afin de permettre la fixation de l'étrier (décrit ultérieurement) sur la cartouche 7 ;
- un premier manchon supérieur 71 cylindrique et lisse, présentant deux gorges périphériques 710 propres à recevoir des joints toriques 79, et ayant un diamètre extérieur sensiblement équivalent au diamètre intérieur D1 de l'alésage supérieur 21, et plus précisément inférieur au diamètre intérieur D1 d'un jeu de montage prédéfini afin de pouvoir être monté de manière ajustée et étanche dans l'alésage supérieur 21 ;
- un second manchon supérieur 72 cylindrique et lisse, ayant un diamètre extérieur qui est, d'une part, inférieur au diamètre intérieur D1 de l'alésage supérieur 21 et au diamètre extérieur du premier manchon supérieur 71 et, d'autre part, supérieur au diamètre intérieur D2 de l'alésage intermédiaire 22, où ce second manchon supérieur 72 présente des trous supérieurs 720 traversant et débouchant dans une chambre supérieure 761 délimitée au moins partiellement par le second manchon supérieur 72,
- un premier manchon intermédiaire 73 cylindrique et lisse, présentant une gorge périphérique 730 propre à recevoir un joint torique 79, et ayant un diamètre extérieur qui est inférieur au diamètre extérieur du second manchon supérieur 72 et qui est également sensiblement équivalent au diamètre intérieur D2 de l'alésage intermédiaire 22, et plus précisément inférieur au diamètre intérieur D2 d'un jeu de montage prédéfini afin de pouvoir être monté de manière ajustée et étanche dans l'alésage intermédiaire 22 ;
- un second manchon intermédiaire 74 cylindrique et lisse, ayant un diamètre extérieur qui est, d'une part, inférieur à au diamètre intérieur D2 de l'alésage intermédiaire 22 et au diamètre extérieur du premier manchon intermédiaire 73 et, d'autre part, supérieur au diamètre intérieur D3 de l'alésage inférieur 23, où ce second manchon intermédiaire 74 présente des trous intermédiaires 740 traversant et débouchant dans une chambre intermédiaire 762 délimitée au moins partiellement par le second manchon intermédiaire 74, et
- un manchon inférieur 75 cylindrique et lisse, présentant une gorge périphérique 750 propre à recevoir un joint torique 79, et ayant un diamètre extérieur qui est inférieur au diamètre extérieur du second manchon intermédiaire 74 et qui est également sensiblement équivalent au diamètre intérieur D3 de l'alésage inférieur 23, et plus précisément inférieur au diamètre intérieur D3 d'un jeu de montage prédéfini afin de pouvoir être monté de manière ajustée et étanche dans l'alésage inférieur 23.

Ainsi, la cartouche 7 présente :
- un épaulement externe supérieur 724 entre le second manchon supérieur 71 et le premier manchon intermédiaire 73 ; et
- un épaulement externe inférieur 725 entre le second manchon intermédiaire 74 et le manchon inférieur 75.

La cartouche 7 présente deux extrémités opposées, à savoir une extrémité supérieure 77 située sur l'embout supérieur 70, et une extrémité inférieure 78 située sur le manchon inférieur 75.

La cartouche 7 présente intérieurement une cavité interne 76 comprenant successivement :
- la chambre supérieure 761 cylindrique et lisse, débouchant dans l'extrémité supérieure 77 et s'étendant sensiblement sur jusqu'au premier manchon intermédiaire 73 ;
- la chambre intermédiaire 762 cylindrique et lisse, ayant un diamètre intérieur qui est inférieur au diamètre intérieur de la chambre supérieure 761 et s'étendant sensiblement jusqu'au manchon inférieur 75 ; et
- un orifice intérieur 763 cylindrique et lisse, ménagé dans le manchon inférieur 75 et ayant un diamètre intérieur qui est inférieur au diamètre intérieur de la chambre intermédiaire 762.

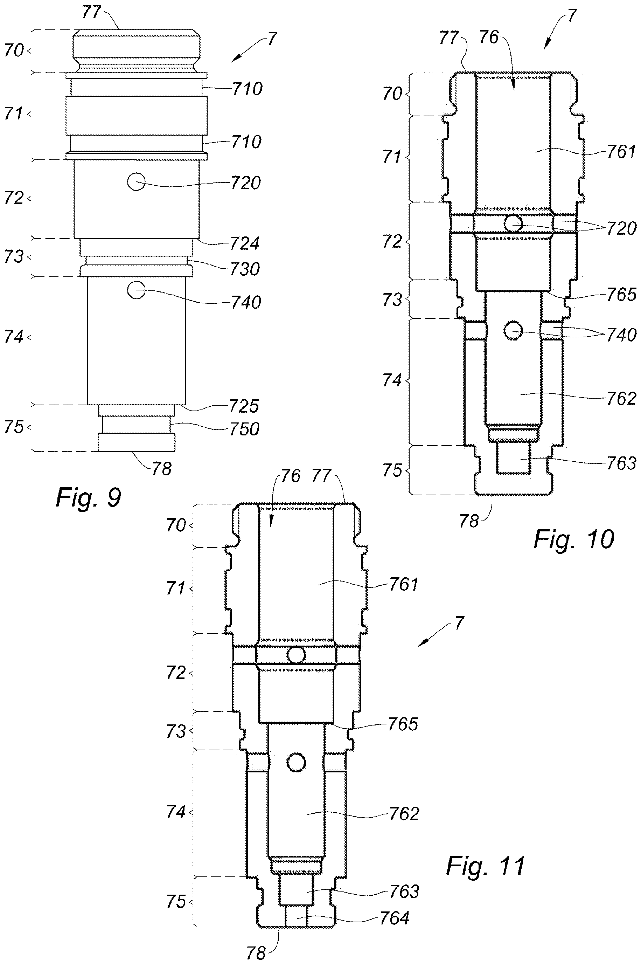

Dans l'exemple de la figure 10, l'orifice intérieur 763 est non débouchant extérieurement, dans la mesure où il ne débouche pas dans l'extrémité inférieure 78 de la cartouche 7, de sorte que la cavité interne 76 est borgne.

Dans l'exemple de la figure 11, l'orifice intérieur 763 est débouchant extérieurement, dans la mesure où il débouche dans l'extrémité inférieure 78 de la cartouche 7 (via un canal 764), de sorte que la cavité interne 76 traverse la cartouche 7 de l'extrémité supérieure 77 à l'extrémité inférieure 78.

La cavité interne 76 présente un épaulement interne 765 entre la chambre supérieure 761 et la chambre intermédiaire 762.

En situation, et comme visible sur les figures 13, 15, 17, 19, 20, 23 et 24, lorsque la cartouche 7 est disposée et maintenue dans la chambre interne 2 du module 1 :
- le manchon inférieur 75 est monté de manière ajustée et étanche (avec son joint torique 79) dans l'alésage inférieur 23 et arrive sensiblement en arasement avec la face inférieure 14 du module 1 ;
- l'épaulement externe inférieur 725 vient en appui sur l'épaulement interne inférieur 25 ;
- le second manchon intermédiaire 74 s'étend dans l'alésage intermédiaire 22, avec un espace annulaire intermédiaire 220 entre le second manchon intermédiaire 74 et l'alésage intermédiaire 22, cet espace annulaire intermédiaire 220 étant en communication avec la chambre intermédiaire 762 via les trous intermédiaires 740, étant noté qu'un perçage 26 débouche dans cet espace annulaire intermédiaire 220 ;
- le premier manchon intermédiaire 73 est monté de manière ajustée et étanche (avec son joint torique 79) dans l'alésage intermédiaire 22 ;
- l'épaulement externe supérieur 724 s'étend en regard de l'épaulement interne supérieur 24 avec un écartement correspondant à un jeu de montage ;
- le second manchon supérieur 72 s'étend dans l'alésage supérieur 21, avec un espace annulaire supérieur 210 entre le second manchon supérieur 72 et l'alésage supérieur 21, cet espace annulaire supérieur 210 étant en communication avec la chambre supérieure 761 via les trous supérieurs 720, étant noté qu'un perçage 26 débouche dans cet espace annulaire supérieur 210 ;
- le premier manchon supérieur 71 est monté de manière ajustée et étanche (avec son joint torique 79 du bas) dans l'alésage supérieur 21 ;
- le premier manchon supérieur 71 dépasse de la face supérieure 13 du module 1 avec le joint torique 79 du haut qui est hors du module 1 ;
- l'embout supérieur 70 dépasse de la face supérieure 13 du module 1.

La suite de la description concerne plus spécifiquement le détendeur à réglage mécanique 3a et le détendeur à réglage pneumatique 3b qui comprennent chacun les organes régulateurs suivants :
- un piston 30 monté coulissant à l'intérieur du second manchon intermédiaire 74 dans la chambre intermédiaire 762 formant une chambre amont (donc reliée à au moins une entrée « E » du module 1 via un perçage 26 adéquat), où ce piston 30 présente une extrémité supérieure formant un clapet 31 et une extrémité inférieure 32 entouré d'un joint torique et coulissant à l'intérieur du manchon inférieur 75 dans l'orifice inférieur 763 qui est non débouchant extérieurement (mode de réalisation de la figure 10) ;
- un corps aval 33 monté de manière statique et étanche, en étant entouré d'un joint torique, à l'intérieur du second manchon supérieur 72, où ce corps aval 33 sépare la chambre intermédiaire 762 de la chambre supérieure 761 formant une chambre avale (donc reliée à au moins une sortie « S » du module 1 via un perçage 26 adéquat), et où ce corps aval 33 présente un trou central 330 définissant un siège formant un siège de détente apte à coopérer avec le clapet 31 ;
- un organe de rappel élastique 34 sollicitant le piston 30 et le clapet 31 dans le sens d'une position de fermeture de la communication entre la chambre intermédiaire 762 et la chambre supérieure 761, de manière opposée à une pression réduite dans la chambre supérieure 761 (ou chambre avale) qui sollicite le piston 30 et le clapet 31 dans le sens d'une position d'ouverture de la communication entre la chambre intermédiaire 762 et la chambre supérieure 761, où l'organe de rappel élastique 34 se présente sous la forme d'un ressort qui est comprimé entre une portée annulaire ménagée sur le pourtour du piston 30 et un collier 35 fixé dans le fond de la chambre intermédiaire 762 au-dessus du joint torique entourant l'extrémité inférieure 32 du piston 30 ;
- une bague 36 montée statique dans la chambre supérieure 761 et en appui sur le corps aval 33, où cette bague 36 présente des trous périphériques qui coïncident avec les trous supérieurs 720 du second manchon supérieur 72 ;
- un bouchon supérieur 37 monté statique et étanche, en étant entouré d'un joint torique, à l'intérieur du premier manchon supérieur 71, où ce bouchon supérieur 35 est en appui sur la bague 36 ;
- un poussoir 38 traversant à la fois le corps aval 33, la bague 36 et le bouchon supérieur 37, où ce poussoir 38 présente une extrémité inférieure apte à exercer un effort sur le clapet 31 dans le sens de la position d'ouverture, et une extrémité supérieure qui dépasse de l'extrémité supérieure 77 de la cartouche 7.

En outre, le piston 30 présente un canal interne 300 traversant ayant deux extrémités opposées comprenant :
- une extrémité supérieure ouverte du côté du corps aval 33 et formant un siège de décharge (pour autoriser une décharge en cas de surpression côté aval), le poussoir 38 étant apte à venir en appui sur le siège de décharge pour le boucher, et
- une extrémité inférieure ouverte dans l'orifice inférieur 763 du manchon inférieur 75.

De plus, les détendeurs 3a et 3b comprennent chacun un étrier 8 creux traversé par un orifice central 89 et présentant un plateau 81 prolongé par un manchon 82.

Le plateau 81 présente une face inférieure propre à venir en appui sur la face supérieure 13 du module 1, et le plateau 81 présente des trous périphériques qui coïncident avec les trous taraudés 20 ménagés dans la face supérieure 13, de sorte que le plateau 81 de l'étrier 8 est fixé par vissage sur la face supérieure 13 au moyen de vis 83 vissées dans les trous taraudés 20. Ces trous périphériques dans le plateau 81 et ces vis 83 forment ainsi des éléments de fixation pour la fixation du détendeur 3a ou 3b sur la face supérieure 13 de n'importe lequel des modules 1.

L'orifice central 89 présente une portion inférieure comprenant successivement, en partant de la face inférieure du plateau 81 :
- une partie lisse ayant un diamètre intérieur sensiblement équivalent au diamètre extérieur du premier manchon supérieur 71, et plus précisément supérieur à ce diamètre extérieur d'un jeu de montage prédéfini afin de pouvoir être monté de manière ajustée et étanche autour de la partie du premier manchon supérieur 71 qui dépasse de la face supérieure 13 du module 1 avec le joint torique 79 du haut qui garantit l'étanchéité ;
- une partie taraudée qui est vissée sur l'embout supérieure 70.

Une entretoise 84 est coincée à l'intérieur de l'orifice central 89 entre l'extrémité supérieure 77 de la cartouche 7 et une portée annulaire prévue à l'intérieur de l'orifice central 89, et un joint torique 85 est prévu à l'intérieur de l'orifice central 89 au-dessus de l'entretoise 84.

Le manchon 82 présente une extrémité supérieure muni d'un filetage extérieur.

L'étrier 8 intègre également un piston de poussée 86 monté coulissant dans une portion supérieure de l'orifice central 89, où ce piston de poussée 86 est entouré par le joint torique 85 et coulisse à l'intérieur de l'entretoise 84 pour présenter une extrémité inférieure qui vient en appui sur le poussoir 38. Ce piston de poussée 86 traverse également un couvercle 87 fixé sur l'extrémité supérieure du manchon 82, ce couvercle 87 bloquant ainsi le piston de poussée 86 en translation vers le haut. Le piston de poussée 86 présente une extrémité supérieure qui dépasse du couvercle 87.

En outre, les détendeurs 3a et 3b comprennent chacun un système de réglage 9a, 9b monté sur l'étrier 8 et agissant sur le piston de poussée 86, et donc sur le poussoir 38, pour autoriser un réglage d'une force d'ouverture du clapet 31 requise pour détendre la pression.

Dans le cadre du détendeur à réglage mécanique 3a illustré sur les figures 12 et 13, le système de réglage est un système de réglage mécanique 9a qui comprend :
- un support 900 tubulaire fixé extérieurement sur l'étrier 8 en étant vissé sur le filetage extérieur de l'extrémité supérieure du manchon 82 ;
- un organe de rappel élastique 901, en l'occurrence un ressort, comprimé à l'intérieur du support 900 entre une portée inférieure 902 sur laquelle prend appui le piston de poussée 86 et une portée supérieure 903 réglable mécaniquement en position afin de permettre un réglage de l'effort de poussée exercée par l'organe de rappel élastique 901 sur le piston de poussée 86.

Plus précisément, le réglage en position de la portée supérieure 903 s'effectue au moyen d'une molette 904 vissée sur une extrémité supérieure du support 900 et agissant sur un axe 905 afin de le déplacer en translation, où cet axe 905 présente une portée annulaire 906 sur laquelle prend appui la portée supérieure 903. Ainsi, en agissant sur la molette 904, l'organe de rappel élastique 901 est plus ou moins comprimé entre la portée inférieure 902 et la portée supérieure 903, et ainsi l'effort exercée sur le piston de poussée 86 est plus ou moins élevé.

Dans le cadre du détendeur à réglage pneumatique 3b illustré sur les figures 14 à 16, le système de réglage est un système de réglage pneumatique 9b qui comprend un support 91 tubulaire fixé extérieurement sur l'étrier 8 en étant vissé sur le filetage extérieur de l'extrémité supérieure du manchon 82, où ce support 91 comprend :
- une portion tubulaire inférieure 911 vissée extérieurement sur le filetage extérieur de l'extrémité supérieure du manchon 82 ;
- une portion tubulaire supérieure 912 élargie comparativement à la portion inférieure 911, où cette portion élargie 911 est munie d'une paroi périphérique délimitant intérieurement une cavité cylindrique lisse ; et
- une paroi annulaire 913 reliant la portion tubulaire inférieure 911 à la portion tubulaire supérieure 912 et muni d'un trou central 914.

Une fois le support 91 fixé sur l'étrier 8, le piston de poussée 86 est introduit à l'intérieur du trou central 914, sans toutefois le traverser complètement.

Le système de réglage pneumatique 9b comprend en outre un piston principal 92 coulissant à l'intérieur du support 91, où ce piston principal 92 comprend :
- une section supérieure 921 monté de manière ajustée et étanche, en étant entouré d'un joint torique, à l'intérieur de la de la cavité cylindrique de la portion supérieure 912, où cette et section supérieure 921 offre une surface supérieure sur laquelle agit une pression de pilotage ; et
- une section inférieure 922 coulissant à l'intérieur du trou central 914 et venant en appui sur l'extrémité supérieure du piston de poussée 86, où cette section inférieure 922 offre une surface inférieure agissant ainsi sur le piston de poussée 86, et où cette surface inférieure présente une superficie inférieure à la surface supérieure.

Le piston principal 92 forme ainsi un piston plein, monté étanche et coulissant dans le support 91 afin d'agir sur le piston de poussée 86, ce piston principal 92 étant soumis à une source de pression de pilotage PP afin de permettre un réglage de l'effort de poussée exercée par ce piston principal 92 sur le piston de poussée 86.

Un évent 915 est ménagé dans le support 91 afin de mettre en communication la surface inférieure de la section supérieure 921 du piston principal 92 (en regard de la paroi annulaire 913) avec la pression ambiante extérieure.

Pour réduire la pression de pilotage PP nécessaire au réglage de l'effort de poussée exercée par ce piston principal 92 sur le piston de poussée 86, il est intéressant que ce système de réglage pneumatique 9b comprenne au moins un étage secondaire 93 décrit ci-dessous qui permet d'introduire un rapport de multiplication tout en offrant un encombrement réduit.

Dans l'exemple des figures 14 à 16, le système de réglage pneumatique 9b comprend deux étages secondaires 93.

Le premier étage secondaire 93 comprend un corps secondaire 94 tubulaire rapporté de manière amovible et étanche sur le support 91 et un piston secondaire 95 monté étanche et coulissant à l'intérieur du corps secondaire 94, où le corps secondaire 94 présente :
- une portion tubulaire supérieure 941 délimitant une cavité supérieure cylindrique, où cette portion tubulaire supérieure 941 repose sur la portion tubulaire supérieure 912 du support 91 et est fixée sur celle-ci au moyen de plusieurs tiges 96 traversant les portions tubulaires supérieures 912, 941 et boulonnées à leurs deux extrémités ; et
- une portion inférieure 942 traversée par un trou central 943 ayant un diamètre intérieur réduit comparativement au diamètre intérieur de la cavité supérieure de la portion tubulaire supérieure 941.

Le piston secondaire 95 du premier étage secondaire 93 présente :
- une section supérieure 951 offrant une surface supérieure sur laquelle agit la pression de pilotage PP et montée étanche, en étant entouré d'un joint torique, à l'intérieur de la cavité supérieure de la portion tubulaire supérieure 941 du corps secondaire 94 ; et
- une section inférieure 952 offrant une surface inférieure venant en appui sur la surface supérieure de la section supérieure 921 du piston principal 92, où cette section inférieure 952 est montée étanche, en étant entouré d'un joint torique, à l'intérieur du trou central 943 de la portion inférieure 942 du corps secondaire 94, et où cette surface inférieure du piston secondaire 95 présente une superficie inférieure à la surface supérieure du piston secondaire 95.

En outre, le piston secondaire 95 est muni d'un canal interne 953 traversant et débouchant dans sa surface inférieure et dans sa surface supérieure, de sorte que la pression de pilotage PP s'applique sur la surface supérieure de la section supérieure 921 du piston principal 92 et en outre cette pression de pilotage PP traverse le piston secondaire 95 via ce canal interne 953 afin de s'appliquer également sur la surface supérieure de la section supérieure 921 du piston principal 92.

Au moins un canal 916 est prévu dans le support 91 et au moins un canal 944 est prévu dans le corps secondaire 94 pour établir ensemble une communication entre le dessous de la section supérieure 921 du piston principal 92 (en regard de la paroi annulaire 913) qui est pour rappel à la pression ambiante extérieure grâce à l'évent 915, et le dessous de la section supérieure 951 du piston secondaire 95 (en regard de la portion inférieure 942).

Avec ce premier étage secondaire 93, la pression de pilotage PP permet d'appliquer une force résultante sur le piston de poussée 86 qui correspond à la somme des deux forces suivantes :
- la force de pression du piston principal 92 qui correspond à la pression de pilotage PP multiplié par la surface supérieure de la section supérieure 921 du piston principal 92 ; et
- la force de pression du piston secondaire 95 du premier étage secondaire 93 qui correspond à la pression de pilotage PP multiplié par la surface supérieure de la section supérieure 951 du piston secondaire 95.

Comme illustré sur les figures 14 à 16, il est possible de prévoir un deuxième étage secondaire 93 qui comprend les mêmes organes que le premier étage secondaire 93, à savoir :
- un corps secondaire 94 tubulaire rapporté de manière amovible et étanche sur le corps secondaire 94 du premier étage secondaire 93 ; et
- un piston secondaire 95 monté étanche et coulissant à l'intérieur du corps secondaire 94 de ce deuxième étage secondaire 93.

Le corps secondaire 94 du deuxième étage secondaire 93 repose sur la portion tubulaire supérieure 941 du corps secondaire 94 du premier étage secondaire 93 et est fixée sur celle-ci au moyen des mêmes tiges 96 traversant les portions tubulaires supérieures 941 des deux corps secondaire 94.

Le piston secondaire 95 du deuxième étage secondaire 93 est également muni d'un canal interne 953 traversant et débouchant dans sa surface inférieure et dans sa surface supérieure, de sorte que la pression de pilotage PP s'applique sur la surface supérieure de la section supérieure 921 du piston principal 92 du deuxième étage secondaire 93, et en outre cette pression de pilotage PP traverse le piston secondaire 95 du deuxième étage secondaire 93 via ce canal interne 953 afin de s'appliquer également sur la surface supérieure de la section supérieure 951 du piston secondaire 95 du premier étage secondaire 93.

Ainsi, avec ce deuxième étage secondaire 93, la pression de pilotage PP permet d'appliquer une force résultante sur le piston de poussée 86 qui correspond à la somme des trois forces suivantes :
- la force de pression du piston principal 92 ; et
- la force de pression du piston secondaire 95 du premier étage secondaire 93 ; et
- la force de pression du piston secondaire 95 du deuxième étage secondaire 93 qui correspond à la pression de pilotage PP multiplié par la surface supérieure de la section supérieure 951 de ce piston secondaire 95.

Il est ainsi possible d'empiler les étages secondaires 93, afin de pouvoir travailler avec une pression de pilotage PP.

Le système de réglage pneumatique 9b comprend en outre un couvercle 97 qui comprend :
- une portion supérieure 971 qui repose sur la portion tubulaire supérieure 912 du support 91 (si le système de réglage pneumatique 9b ne comprend pas d'étage secondaire 93) ou sur la portion tubulaire supérieure 941 du corps secondaire 94 du dernier étage secondaire 93 (à savoir le premier étage secondaire s'il n'en a qu'un, ou le deuxième étage secondaire 93 s'il y en deux, ou le troisième étage secondaire 93 s'il y en trois, etc.), et est fixée à cette portion tubulaire supérieure 912 ou 941 au moyen des mêmes tiges 96, les boulons du haut venant en appui sur le dessus de cette portion supérieure 971 et les boulons du bas venant en appui sur le dessous de la paroi annulaire 913 du support 91 ; et
- une portion inférieure 972 qui est montée de manière étanche, en étant entouré d'un joint torique, à l'intérieur de la cavité cylindrique de la portion tubulaire supérieure 912 du support 1 (si le système de réglage pneumatique 9b ne comprend pas d'étage secondaire 93) ou à l'intérieur de la cavité supérieure cylindrique de la portion tubulaire supérieure 941 du corps secondaire 94 du dernier étage secondaire 93 (si le système de réglage pneumatique 9b comprend au moins un étage secondaire 93).

Ce couvercle 97 est traversé par un orifice central 973 sur lequel est connectée la source de pression de pilotage PP.

Il est à noter que le système de réglage mécanique 9a et le système de réglage pneumatique 9b sont interchangeables car ils sont tous les deux adaptés pour être montés de manière amovible, par vissage sur le filetage extérieur de l'extrémité supérieure du manchon 82, et pour agir sur le piston de poussée 86.

La suite de la description concerne plus spécifiquement la vanne de sectionnement à actionneur manuel 4a, la vanne de sectionnement à actionneur pneumatique 4b et la vanne de sectionnement à actionneur électrique 4c qui comprennent chacun les organes régulateurs suivants :
- un piston 40 monté coulissant à l'intérieur du second manchon intermédiaire 74 dans la chambre intermédiaire 762 formant une chambre amont (donc reliée à au moins une entrée « E » du module 1 via un perçage 26 adéquat), où ce piston 40 présente une extrémité supérieure formant un clapet 41 et une extrémité inférieure 42 entouré d'un joint torique et coulissant à l'intérieur du manchon inférieur 75 dans l'orifice inférieur 763 qui est débouchant extérieurement (mode de réalisation de la figure 11), de sorte que le piston 40 est soumis à la pression ambiante extérieure ;
- un corps aval 43 monté de manière statique et étanche, en étant entouré d'un joint torique, à l'intérieur du second manchon supérieur 72, où ce corps aval 43 sépare la chambre intermédiaire 762 de la chambre supérieure 761 formant une chambre avale (donc reliée à au moins une sortie « S » du module 1 via un perçage 26 adéquat), et où ce corps aval 43 présente un trou central 430 définissant un siège formant un siège de détente apte à coopérer avec le clapet 41 ;
- un organe de rappel élastique 44 sollicitant le piston 40 et le clapet 41 dans le sens d'une position de fermeture de la communication entre la chambre intermédiaire 762 et la chambre supérieure 761, où l'organe de rappel élastique 44 se présente sous la forme d'un ressort qui est comprimé entre une portée annulaire ménagée sur le pourtour du piston 40 et un collier 45 fixé dans le fond de la chambre intermédiaire 762 au-dessus du joint torique entourant l'extrémité inférieure 42 du piston 40 ;
- une bague 46 montée statique dans la chambre supérieure 761 et en appui sur le corps aval 43, où cette bague 46 présente des trous périphériques qui coïncident avec les trous supérieurs 720 du second manchon supérieur 72 ;
- un bouchon supérieur 47 monté statique et étanche, en étant entouré d'un joint torique, à l'intérieur du premier manchon supérieur 71, où ce bouchon supérieur 45 est en appui sur la bague 46 ;
- un poussoir 48 traversant à la fois le corps aval 43, la bague 46 et le bouchon supérieur 47, où ce poussoir 48 présente une extrémité inférieure apte à exercer un effort sur le clapet 41 dans le sens d'une position d'ouverture de la communication entre la chambre intermédiaire 762 et la chambre supérieure 761, et une extrémité supérieure qui dépasse de l'extrémité supérieure 77 de la cartouche 7.

De plus, les vannes de sectionnement 4a, 4b, 4c comprennent chacune un étrier 80 creux traversé par un orifice central 890 et présentant un plateau 810 prolongé par un manchon 820.

Le plateau 810 présente une face inférieure propre à venir en appui sur la face supérieure 13 du module 1, et le plateau 810 présente des trous périphériques qui coïncident avec les trous taraudés 20 ménagés dans la face supérieure 13, de sorte que le plateau 810 de l'étrier 80 est fixé par vissage sur la face supérieure 13 au moyen de vis 830 vissées dans les trous taraudés 20.

Ces trous périphériques dans le plateau 810 et ces vis 830 forment ainsi des éléments de fixation pour la fixation de la vanne de sectionnement 4a, 4b ou 4c sur la face supérieure 13 de n'importe lequel des modules 1.

L'orifice central 890 présente une portion inférieure comprenant successivement, en partant de la face inférieure du plateau 810 :
- une partie lisse ayant un diamètre intérieur sensiblement équivalent au diamètre extérieur du premier manchon supérieur 71, et plus précisément supérieur à ce diamètre extérieur d'un jeu de montage prédéfini afin de pouvoir être monté de manière ajustée et étanche autour de la partie du premier manchon supérieur 71 qui dépasse de la face supérieure 13 du module 1 avec le joint torique 79 du haut qui garantit l'étanchéité ;
- une partie taraudée qui est vissée sur l'embout supérieure 70.

L'orifice central 890 présente une portion supérieure munie d'un orifice taraudé 891, et le poussoir 48 débouche dans cette portion supérieure.

En outre, les vannes de sectionnement 4a, 4b, 4c comprennent chacune un actionneur 19a, 19b, 19c monté sur l'étrier 80 et agissant sur le poussoir 48 pour contrôler la position relative du clapet 41 vis-à-vis du siège 430 entre la position de fermeture et la position d'ouverture, autrement dit pour contrôler l'ouverture/fermeture de l'écoulement gazeux entre la ou chaque entrée « E » du module 1 et la ou chaque sortie « S » du module 1.

Dans le cadre de la vanne de sectionnement à actionneur manuel 4a illustrée sur les figures 17 et 18, l'actionneur est un actionneur manuel 19a qui comprend une molette 190 solidaire d'un organe de poussée 191 muni d'une portion filetée qui est vissée dans l'orifice taraudé 891de l'orifice central 890 de l'étrier 80, où cette portion filetée de l'organe de poussée 191 est en appui sur le poussoir 48.

Ainsi, en agissant sur le robinet 190, l'organe de poussée 191 est déplacé en translation (par vissage/dévissage) et agit ainsi sur le poussoir 48 pour ouvrir/fermer la vanne de sectionnement à actionneur manuel 4a.

Dans le cadre de la vanne de sectionnement à actionneur pneumatique 4b illustrée sur les figures 19 et 20, l'actionneur est un actionneur pneumatique 19b qui comprend un support 192 fixé sur l'étrier 80 et traversé par un piston de poussée 193 propre à venir en appui sur le poussoir sous la sollicitation d'une source de pression de contrôle PC.

Le support 192 comprend une douille 194 qui est vissée dans l'orifice taraudé 891 de l'orifice central 890 de l'étrier 80, et comprend en outre un corps creux 195 qui est fixé, notamment par vissage, sur la douille 194. Le piston de poussée 193 est montée coulissant et de manière étanche, en étant entouré d'un joint torique, à l'intérieur du corps creux 195, où ce corps creux 195 est muni d'un orifice central 196 sur lequel est connectée la source de pression de contrôle PC.

Le piston de poussée 193 présente une tige traversant la douille 194 pour venir en appui sur le poussoir 48 lorsqu'une pression de contrôle PC définie est appliquée sur le piston de poussée 193. Ainsi, en appliquant une pression de contrôle PC, le piston de poussée 193 est déplacé en translation et agit ainsi sur le poussoir 48 pour ouvrir/fermer la vanne de sectionnement à actionneur pneumatique 4b.

Dans le cadre de la vanne de sectionnement à actionneur électrique 4c illustrée sur la figure 21, l'actionneur est un actionneur électrique 19c qui comprend un support 197 qui est vissé dans l'orifice taraudé 891 de l'orifice central 890 de l'étrier 80, et qui est traversé par un organe de poussée (non illustré) propre à venir en appui sur le poussoir 48 sous la sollicitation d'un moteur électrique 198 qui contrôle la translation de cet organe de poussée. Ainsi, en contrôlant le moteur électrique 198, l'organe de poussée est déplacé en translation et agit ainsi sur le poussoir 48 pour ouvrir/fermer la vanne de sectionnement à actionneur électrique 4c.

Ainsi que schématisé sur la figure 22, il est à noter que l'actionneur manuel 19a, l'actionneur pneumatique 19b et l'actionneur électrique 19c sont interchangeables car ils sont tous les trois adaptés pour être montés par de manière amovible, par vissage dans l'orifice taraudé 891 de l'orifice central 890 de l'étrier 80, et pour agir sur le poussoir 48.

La suite de la description concerne plus spécifiquement le dispositif d'isolation de non-retour 5 qui remplit une fonction de clapet anti-retour et qui comprend les organes suivants :
- un piston 50 monté coulissant à l'intérieur du premier manchon supérieur 71 dans la chambre supérieure 761 formant une chambre avale (donc reliée à au moins une sortie « S » du module 1 via un perçage 26 adéquat), où le piston 50 présente une extrémité inférieure formant un clapet 51 (ou clapet de non-retour) ;
- un corps aval 52 monté de manière statique et étanche, en étant entouré d'un joint torique, à l'intérieur du second manchon supérieur 72, où ce corps aval 52 est placé en butée sur l'épaulement interne 765 et en-dessous des trous supérieurs 720, où ce corps aval 52 sépare la chambre supérieure 761 de la chambre intermédiaire 762 formant une chambre amont (donc reliée à au moins une entrée « E » du module 1 via un perçage 26 adéquat), et où ce corps aval 52 présente un trou central 53 définissant un siège coopérant avec le clapet 51 soumis à la pression du gaz dans la chambre intermédiaire 762 dans le sens d'un décollement vis-à-vis du siège 53 ;
- un organe de rappel élastique 54 sollicitant le piston 50 et le clapet 51 contre le corps aval 52 dans le sens d'une position de fermeture de la communication entre la chambre supérieure 761 de la chambre intermédiaire 762.

De plus, le dispositif d'isolation de non-retour 5 comprend en outre un étrier 180 formant un couvercle clos et comprenant une platine 181 solidaire d'une calotte 182 pleine. La platine 181 présente des trous périphériques qui coïncident avec les trous taraudés 20 ménagés dans la face supérieure 13, de sorte que la platine 181 de l'étrier 180 est fixée par vissage sur la face supérieure 13 au moyen de vis 183 vissées dans les trous taraudés 20. Ces trous périphériques dans le plateau 181 et ces vis 183 forment ainsi des éléments de fixation pour la fixation du dispositif d'isolation de non-retour 5 sur la face supérieure 13 de n'importe lequel des modules 1.

L'organe de rappel élastique 54, qui est un ressort, est comprimé entre la calotte 182 de l'étrier 180 et le piston 50.

Ainsi, le dispositif d'isolation de non-retour 5 autorise la circulation du gaz de l'entrée (ou de la chambre intermédiaire 762 formant une chambre amont) en direction de la sortie (ou de la chambre supérieure 761 formant une chambre avale) lorsque la pression en entrée dépasse une pression minimale suffisante pour faire décoller le clapet 51 du siège 53 à l'encontre de l'effort inverse exercé par l'organe de rappel élastique 54 dont le tarage permet de régler cette pression minimale. Par contre, le dispositif d'isolation de non-retour 5 interdit la circulation du gaz de la sortie en direction de l'entrée.

La suite de la description concerne plus spécifiquement le dispositif de filtration 6 qui remplit une fonction de filtration du gaz circulant à l'intérieur de ce dispositif de filtration 6 et qui comprend une cartouche filtrante 60 réceptionnée à l'intérieur de la chambre supérieure 761 et ayant une entrée débouchant dans la chambre intermédiaire 762.

De plus, le dispositif de filtration 6 comprend en outre un étrier 180 formant un couvercle clos et identique à l'étrier 180 du dispositif d'isolation de non-retour 5 décrit ci-dessus.

La cartouche filtrante 60 est coincée entre un support inférieur 61 et un support supérieur 62 placés dans la chambre supérieure 761.

Le support inférieur 61 est monté de manière statique et étanche, en étant entouré d'un joint torique, à l'intérieur du second manchon supérieur 72, où ce support inférieur 61 est placé en butée sur l'épaulement interne 765 et en-dessous des trous supérieurs 720.

Le support supérieur 62 est monté de manière statique et étanche, en étant entouré d'un joint torique, à l'intérieur de l'embout supérieur 70, où ce support supérieur 62 est placé en butée contre la calotte 182 de l'étrier 180.

Comme visible sur les figures 26 à 28, il est possible de former un kit de distribution et de régulation d'un gaz sous pression, qui comprend :
- plusieurs modules 1, où tous les modules sont identiques ; et
- plusieurs dispositifs de distribution ou de régulation 3a, 3b, 4a, 4b, 4c, 5, 6 prévus pour une distribution ou une régulation d'un gaz passant dans les chambres internes 2 des corps principaux 10 des modules 1 une fois ces modules 1 munis des perçages 26 adéquats et une fois ces modules 1 accouplés par fixation des platines 15 entre elles.

Ainsi, avec un tel kit, il est possible de construire, de manière complètement libre, des systèmes de distribution et de régulation 100 d'un gaz sous pression, notamment pour une station de distribution d'hydrogène gazeux pour le remplissage d'un réservoir de pile à combustible, où :
- des modules 1 sont accouplés par fixation d'au moins une platine 15 d'un module sur une platine 15 d'au moins un module 1 adjacent, mettant en communication les trous centraux 18 des platines 15 fixées ensemble ;
- des dispositifs de distribution ou de régulation 3a, 3b, 4a, 4b, 4c, 5, 6 sont fixés sur les corps principaux 10 de tout ou partie des modules 1, avec leurs cartouches 7 reçues à l'intérieur des chambres internes 2 et avec les étriers 8, 80, 180 fixés sur les faces supérieures 13 des modules 1 ;
- des perçages 26 sont ménagés dans les trous centraux 18 des platines 15 qui sont fixées à une autre platine 15, de tels perçages 26 formant des canaux de communication débouchant dans l'alésage supérieur 21 ou dans l'alésage intermédiaire 22 de la chambre interne 2 du module 1 concerné afin de mettre en communication les dispositifs de distribution ou de régulation 3a, 3b, 4a, 4b, 4c, 5, 6 des modules accouplés 1.

Dans l'exemple de la figure 26, le système de distribution et de régulation 100 comprend quatre modules 1 supportant successivement, de l'entrée vers la sortie, une vanne de sectionnement à actionneur manuel 4a, un dispositif d'isolation de non-retour 5, un détendeur à réglage pneumatique 3b et une vanne de sectionnement à actionneur électrique 4c, où le premier module 1 supporte en entrée un raccord d'entrée RE fixé en entrée sur une platine 15 et où le dernier module 1 supporte en sortie un raccord de sortie RS fixé en sortie sur une platine 15.

Dans les exemples des figures 27 et 27, le système de distribution et de régulation 100 comprend des modules 1 qui supportent soit une vanne de sectionnement à actionneur manuel 4a, soit une vanne de sectionnement à actionneur pneumatique 4b, soit un détendeur à réglage mécanique 3a.

Des raccords d'entrée et de sortie RE, RS sont également prévus en étant fixés sur les platines de certains des modules 1.

Dans les exemples des figures 27 et 27, le système de distribution et de régulation 100 comprend également des collecteurs 200 formé chacune d'une pièce monobloc en matériau métallique qui comprend un corps principal 201 qui a une forme générale parallélépipédique rectangle et qui présente :
- quatre faces longitudinales 202 ayant chacune une longueur équivalente à celle de deux modules 1 accouplés, et
- deux faces d'extrémité 203 de dimensions équivalentes à celles d'une face d'un module 1, où chaque face d'extrémité 203 est munie d'une platine 204 identique à la platine 15 d'un module 1.

Un collecteur 200 présente une chambre interne 205 débouchant dans deux faces longitudinales 202 parallèles et dont la forme et les dimensions sont équivalentes à celles d'une chambre interne 2 d'un module 1, de sorte qu'un dispositif de distribution ou de régulation 3a, 3b, 4a, 4b, 4c, 5, 6 peut être réceptionné et fixé sur un tel collecteur 200 ; des perçages 206 dans le collecteur 200 étant alors nécessaires pour établir les communications, et le nombre et la disposition des perçages 206 autorisent une pluralité de configurations comme schématisé sur la figure 30.

Un collecteur 200 permet également de jumeler deux modules 1 sur deux faces longitudinales 202, comme visible sur les figures 27 et 28. A ce titre, des trous taraudés sont prévus sur ces faces longitudinales 202 pour la fixation des étriers, et des perçages seront prévus dans le collecteur pour la circulation du gaz.

Un collecteur 200 peut également recevoir des sondes, telles que des manomètres MA ou des sondes de température ST, ainsi que des raccords d'entrée RE et des raccords de sortie RS.

Ainsi, l'invention permet de réaliser des systèmes de distribution et de régulation 100 pour des installations au sol (comme par exemple des stations de remplissage, des stations de transfert, des sites de production, des sites de stockage) et également pour des installations embarqués (comme par exemple dans des véhicules ravitailleurs).

Cette invention offre également :
- un niveau de standardisation et un niveau d'intégration et de modularité très élevés, avec des modules 1 universels et avec des cartouches 7 également universelles, sans compter les interchangeabilités évoquées ci-dessus ;
- un niveau de compacité également élevé, avec des modules 1 et des dispositifs de distribution ou de régulation 3a, 3b, 4a, 4b, 4c, 5, 6 compacts ;
- un niveau de sécurité également élevé en supprimant des liaisons raccords et des assemblages soudés ; et
- un niveau de garantie de taux de service également élevé du fait des facilités de maintenance et/ou de remplacement des dispositifs de distribution ou de régulation 3a, 3b, 4a, 4b, 4c, 5, 6.

## Revendications

1. Module (1) pour un kit de distribution et de régulation d'un gaz sous pression, ledit module (1) comprenant un corps principal (10) ayant une forme générale parallélépipédique et présentant quatre faces latérales (11, 12) deux à deux parallèles et s'étendant entre une face supérieure (13) et une face inférieure (14) parallèles entre elles,
dans lequel une chambre interne (2) est ménagée dans le corps principal (10) en le traversant pour déboucher dans la face supérieure (13) et dans la face inférieure (14), ladite chambre interne (2) étant prévue pour recevoir intérieurement un dispositif de distribution ou de régulation (3a; 3b; 4a; 4b; 4c; 5; 6) prévu pour une distribution ou une régulation d'un gaz passant dans la chambre interne (2), ladite chambre interne (2) comprenant successivement :
- un alésage supérieur (21) cylindrique débouchant dans la face supérieure (13),
- un alésage intermédiaire (22) cylindrique ayant un diamètre intérieur (D2) qui est inférieur au diamètre intérieur (D1) de l'alésage supérieur (21), et
- un alésage inférieur (23) cylindrique débouchant dans la face inférieure (14) et ayant un diamètre intérieur (D3) qui est inférieur au diamètre intérieur (D2) de l'alésage intermédiaire (22) ;
et dans lequel sur chaque face latérale (11 ; 12) est prévue une platine (15) adaptée pour une fixation sur une platine (15) d'un module (1) adjacent similaire, où ladite platine (15) présente des trous périphériques (17) servant au passage de vis de fixation (170) et un trou central (18) borgne, en particulier adapté pour guider un perçage (26) débouchant dans l'alésage supérieur (21) ou dans l'alésage intermédiaire (22) de la chambre interne (2).

2. Module (1) selon la revendication 1, dans lequel des trous taraudés (20) sont ménagés dans la face supérieure (13) pour la fixation d'un étrier (8; 80; 180) solidaire du dispositif de distribution ou de régulation (3a; 3b; 4a; 4b; 4c; 5; 6).

3. Kit de distribution et de régulation d'un gaz sous pression, ledit kit comprenant :
- plusieurs modules (1) conformes à l'une quelconque des revendications 1 et 2, où tous les modules (1) sont identiques ; et
- plusieurs dispositifs de distribution ou de régulation (3a; 3b; 4a; 4b; 4c; 5; 6) prévus pour une distribution ou une régulation d'un gaz passant dans les chambres internes des corps principaux desdits modules (1) ; dans lequel chaque dispositif de distribution ou de régulation (3a; 3b; 4a; 4b; 4c; 5; 6) comprend une cartouche (7) formée d'un corps tubulaire adapté pour être reçu à l'intérieur d'une chambre interne (2) de n'importe lequel des modules (1), où ladite cartouche (7) comprend successivement :
- un premier manchon supérieur (71) cylindrique supportant au moins un joint torique et prévu pour être monté de manière étanche dans l'alésage supérieur (21) ;
- un second manchon supérieur (72) cylindrique ayant un diamètre extérieur qui est, d'une part, inférieur au diamètre intérieur (D1) de l'alésage supérieur (21) et au diamètre extérieur du premier manchon supérieur (71) et, d'autre part, supérieur au diamètre intérieur (D2) de l'alésage intermédiaire (22), ledit second manchon supérieur (72) présentant au moins un trou supérieur (720) traversant et débouchant dans une chambre supérieure (761) délimitée au moins partiellement par le second manchon supérieur (72),
- un premier manchon intermédiaire (73) cylindrique supportant au moins un joint torique et prévu pour être monté de manière étanche dans l'alésage intermédiaire (22), ledit premier manchon intermédiaire (73) ayant un diamètre extérieur qui est inférieur au diamètre extérieur du second manchon supérieur (72) ;
- un second manchon intermédiaire (74) cylindrique ayant un diamètre extérieur qui est, d'une part, inférieur au diamètre intérieur (D2) de l'alésage intermédiaire (22) et au diamètre extérieur du premier manchon intermédiaire (73) et, d'autre part, supérieur au diamètre intérieur (D3) de l'alésage inférieur (23), ledit second manchon intermédiaire (74) présentant au moins un trou intermédiaire (740) traversant et débouchant dans une chambre intermédiaire (762) délimitée au moins partiellement par le second manchon intermédiaire (74), et
- un manchon inférieur (75) cylindrique ayant un diamètre extérieur qui est inférieur au diamètre extérieur du second manchon intermédiaire (74), où ledit manchon inférieur (75) supporte au moins un joint torique et est prévu pour être monté de manière étanche dans l'alésage inférieur (23).

4. Kit de distribution et de régulation selon la revendication 3, dans lequel au moins un dispositif de distribution ou de régulation (3a; 3b; 4a; 4b; 4c; 5; 6) comprend, à l'intérieur de la cartouche (7), un clapet (31; 41; 51) mobile relativement à un siège (330; 430; 53) entre une position de fermeture de la communication entre la chambre intermédiaire (762) et la chambre supérieure (761) et une position d'ouverture de la communication entre la chambre intermédiaire (762) et la chambre supérieure (761).

5. Kit de distribution et de régulation selon la revendication 4, dans lequel les dispositifs de distribution ou de régulation comprennent au moins un détendeur (3a ; 3b) comprenant les organes régulateurs suivants :
- un piston (30) monté coulissant à l'intérieur du second manchon intermédiaire (74) dans la chambre intermédiaire (762) formant une chambre amont, où ledit piston (30) présente une extrémité supérieure formant le clapet (31) et une extrémité inférieure (32) entourée d'un joint torique et coulissant à l'intérieur du manchon inférieur (75) dans un orifice inférieur (763) non débouchant extérieurement ;
- un corps aval (33) monté statique à l'intérieur du second manchon supérieur (72) et délimitant la chambre supérieure (761) formant une chambre avale, où ledit corps aval (33) présente un trou central définissant le siège (330) formant un siège de détente apte à coopérer avec le clapet (31) ;
- un organe de rappel élastique (34) sollicitant le piston (30) et le clapet (31) dans le sens de la position de fermeture, de manière opposée à une pression réduite dans la chambre avale qui sollicite le piston (30) et le clapet (31) dans le sens de la position d'ouverture ;
- un bouchon supérieur (37) monté statique à l'intérieur du premier manchon supérieur (71) ;
- un poussoir (38) traversant le bouchon supérieur (37) et apte à exercer un effort sur le clapet (31) dans le sens de la position d'ouverture ;
dans lequel le piston (30) présente un canal interne (300) traversant ayant deux extrémités opposées comprenant, d'une part, une extrémité supérieure ouverte du côté du corps aval (33) et formant un siège de décharge et, d'autre part, une extrémité inférieure ouverte dans l'orifice inférieur (763) du manchon inférieur (75), et où le poussoir (38) est apte à venir en appui sur le siège de décharge pour le boucher ;
et dans lequel le détendeur (3a ; 3b) comprend en outre :
- un étrier (8) fixé sur la cartouche (7) et muni d'éléments de fixation (83) pour la fixation du détendeur (3a; 3b) sur la face supérieure (13) de n'importe lequel des modules (1), où l'étrier (8) intègre un piston de poussée (86) monté coulissant et propre à venir en appui sur le poussoir (38), ce piston de poussée (86) dépassant de l'étrier (8) ; et
- un système de réglage (9a ; 9b) monté sur l'étrier (8) et agissant sur le piston de poussée (86) et ainsi sur le poussoir (38) pour autoriser un réglage d'une force d'ouverture du clapet (31) requise pour détendre la pression.

6. Kit de distribution et de régulation selon la revendication 5, dans lequel le système de réglage est un système de réglage mécanique (9a) comprenant un support (900) fixé sur l'étrier (8) et supportant intérieurement un organe de rappel élastique (901) comprimé entre une portée inférieure (902) sur laquelle prend appui le piston de poussée (86) et une portée supérieure (903) réglable mécaniquement en position afin de permettre un réglage de l'effort de poussée exercée par l'organe de rappel élastique (901) sur le piston de poussée (86).

7. Kit de distribution et de régulation selon la revendication 5, dans lequel le système de réglage est un système de réglage pneumatique (9b) comprenant un support (91) fixé sur l'étrier (8) et recevant intérieurement un piston principal (92) plein monté étanche et coulissant dans le support (91), où ce piston principal (92) agit sur le piston de poussée (86) et est soumis à une source de pression de pilotage (PP) afin de permettre un réglage de l'effort de poussée exercée par ce piston principal (92) sur le piston de poussée (86).

8. Kit de distribution et de régulation selon la revendication 7, dans lequel le piston principal (92) présente :
- une section supérieure (921) offrant une surface supérieure sur laquelle agit la pression de pilotage (PP) ; et
- une section inférieure (922) offrant une surface inférieure agissant sur le piston de poussée (86), où ladite surface inférieure présente une superficie inférieure à la surface supérieure.

9. Kit de distribution et de régulation selon l'une quelconque des revendications 4 à 8, dans lequel les dispositifs de distribution ou de régulation comprennent au moins une vanne de sectionnement (4a ; 4b ; 4c) comprenant les organes régulateurs suivants :
- un piston (40) monté coulissant à l'intérieur du second manchon intermédiaire (74) dans la chambre intermédiaire (762) formant une chambre amont, où ledit piston (40) présente une extrémité supérieure formant le clapet (41) et une extrémité inférieure (42) entourée d'un joint torique et coulissant à l'intérieur du manchon inférieur (75) dans un orifice inférieur (763) débouchant extérieurement ;
- un corps aval (43) monté statique à l'intérieur du second manchon supérieur (72) et délimitant la chambre supérieure (761) formant une chambre avale, où ledit corps aval (43) présente un trou central définissant le siège (430) coopérant avec le clapet (41) ;
- un organe de rappel élastique (44) sollicitant le piston (40) et le clapet (41) dans le sens de la position de fermeture ;
- un bouchon supérieur (47) monté statique à l'intérieur du premier manchon supérieur (71) ;
- un poussoir (48) traversant le bouchon supérieur (47) et apte à exercer un effort sur le clapet (41) dans le sens de la position d'ouverture ;
et dans lequel la vanne de sectionnement (4a ; 4b ; 4c) comprend en outre :
- un étrier (80) solidaire du bouchon supérieur (47) et muni d'éléments de fixation (830) pour la fixation de la vanne de sectionnement (4a ; 4b ; 4c) sur la face supérieure (13) de n'importe lequel des modules (1) ; et
- un actionneur (19a ; 19b ; 19c) monté sur l'étrier (80) et agissant sur le poussoir (48) pour contrôler la position relative du clapet (41) vis-à-vis du siège (430) entre la position de fermeture et la position d'ouverture.

10. Kit de distribution et de régulation selon la revendication 9, dans lequel la vanne de sectionnement (4a ; 4b ; 4c) comprend un actionneur choisi parmi les actionneurs suivants :
- un actionneur manuel (19a) comprenant une molette (190) solidaire d'un organe de poussée (191) vissé dans l'étrier (80) et propre à venir en appui sur le poussoir (48) ;
- un actionneur pneumatique (19b) comprenant un support (192) fixé sur l'étrier (80) et traversé par un piston de poussée (193) propre à venir en appui sur le poussoir (48) sous la sollicitation d'une source de pression de contrôle (PC) ;
- un actionneur électrique (19c) comprenant un support (197) fixé sur l'étrier (80) et traversé par un organe de poussée propre à venir en appui sur le poussoir (48) sous la sollicitation d'un moteur électrique (198).

11. Kit de distribution et de régulation selon la revendication 10, dans lequel les actionneurs (19a, 19b, 19c) de la vanne de sectionnement (4a ; 4b ; 4c) sont interchangeables, chaque vanne de sectionnement (4a ; 4b ; 4c) ayant les mêmes organes régulateurs (40, 43, 44, 47, 48) et le même étrier (80), où ledit étrier (80) comprend un orifice taraudé (891) à l'intérieur duquel peuvent être vissés l'organe de poussée (191) de l'actionneur manuel (19a), le support (192) de l'actionneur pneumatique (19b) et le support (197) de l'actionneur électrique (19c).

12. Kit de distribution et de régulation selon l'une quelconque des revendications 4 à 11, dans lequel les dispositifs de distribution ou de régulation comprennent au moins un dispositif d'isolation de non-retour (5) comprenant les organes suivants :
- un piston (50) monté coulissant à l'intérieur du premier manchon supérieur (71) dans la chambre supérieure (761) formant une chambre avale, où ledit piston (50) présente une extrémité inférieure formant le clapet (51) ;
- un corps aval (52) monté statique à l'intérieur du second manchon supérieur (72) et délimitant la chambre supérieure (761) et la chambre intermédiaire (762) formant une chambre amont, où ledit corps aval (52) présente un trou central définissant le siège (53) coopérant avec le clapet (51) soumis à la pression du gaz dans la chambre intermédiaire (762) dans le sens d'un décollement vis-à-vis du siège (53) ;
- un organe de rappel élastique (54) sollicitant le piston (50) et le clapet (51) dans le sens de la position de fermeture ;
et dans lequel le dispositif d'isolation de non-retour (5) comprend en outre un étrier (180) muni d'éléments de fixation (183) pour la fixation du dispositif d'isolation de non-retour (5) sur la face supérieure (13) de n'importe lequel des modules (1), ledit étrier (180) formant un couvercle clos de sorte que ledit organe de rappel élastique (54) vient en appui sur ledit étrier (180).

13. Kit de distribution et de régulation selon l'une quelconque des revendications 3 à 12, dans lequel les dispositifs de distribution ou de régulation comprennent au moins un dispositif de filtration (6) comprenant une cartouche filtrante (60) réceptionnée à l'intérieur de la chambre supérieure (761) et ayant une entrée débouchant dans la chambre intermédiaire (762),
et dans lequel le dispositif de filtration (6) comprend en outre un étrier (180) muni d'éléments de fixation (183) pour la fixation du dispositif de filtration (6) sur la face supérieure (13) de n'importe lequel des modules (1), ledit étrier (180) formant un couvercle clos.

14. Système de distribution et de régulation (100) d'un gaz sous pression, formé au moins en partie à partir d'un kit de distribution et de régulation selon l'une quelconque des revendications 3 à 13, dans lequel :
- des modules (1) sont accouplés par fixation d'au moins une platine (15) d'un module (1) sur une platine (15) d'au moins un module (1) adjacent, mettant en communication les trous centraux (18) des platines (15) fixées ensemble ;
- des dispositifs de distribution ou de régulation (3a; 3b; 4a; 4b; 4c; 5; 6) sont fixés sur les corps principaux (10) de tout ou partie des modules (1), avec leurs cartouches (7) reçues à l'intérieur des chambres internes (2) ;
- des perçages (26) sont ménagés dans les trous centraux (18) des platines (15) qui sont fixées à une autre platine (15), de tels perçages (26) formant des canaux de communication débouchant dans l'alésage supérieur (21) ou dans l'alésage intermédiaire (22) de la chambre interne (2) du module (1) concerné afin de mettre en communication les dispositifs de distribution ou de régulation des modules (1) accouplés.

15. Station de distribution d'hydrogène gazeux pour le remplissage d'un réservoir de pile à combustible, ladite station distribution d'hydrogène gazeux comprenant au moins un système de distribution et de régulation (100) selon la revendication 14.

## Patentansprüche

1. Modul (1) für ein Kit zur Verteilung und Regelung eines unter Druck stehenden Gases, wobei das Modul (1) einen Hauptkörper (10) umfasst, der eine allgemeine parallelepipedische Form hat und vier jeweils zu zweit parallele seitliche Flächen (11, 12) aufweist, die sich zwischen einer zueinander parallelen oberen Fläche (13) und einer unteren Fläche (14) erstrecken,
wobei eine innere Kammer (2) im Hauptkörper (10) ausgebildet ist, indem sie ihn durchquert, um in der oberen Fläche (13) und in der unteren Fläche (14) auszumünden, wobei die innere Kammer (2) vorgesehen ist, um innen eine Verteilungs- oder Regelungsvorrichtung (3a; 3b; 4a; 4b; 4c; 5; 6) aufzunehmen, die für eine Verteilung oder eine Regelung eines Gases vorgesehen ist, das in die innere Kammer (2) strömt, wobei die innere Kammer (2) aufeinanderfolgend umfasst:
- eine zylindrische obere Bohrung (21), die in der oberen Fläche (13) ausmündet,
- eine zylindrische Übergangsbohrung (22) mit einem Innendurchmesser (D2), der kleiner als der Innendurchmesser (D1) der oberen Bohrung (21) ist, und
- eine zylindrische untere Bohrung (23), die in der unteren Fläche (14) ausmündet und einen Innendurchmesser (D3) hat, der kleiner als der Innendurchmesser (D2) der Übergangsbohrung (22) ist;
und wobei auf jeder seitlichen Fläche (11; 12) eine Platte (15) vorgesehen ist, die für eine Befestigung auf einer Platte (15) eines ähnlichen benachbarten Moduls (1) geeignet ist, wobei die Platte (15) periphere Löscher (17) aufweist, die für den Durchgang von Befestigungsschrauben (170) dienen, und ein zentrales Sackloch (18), das insbesondere zur Führung einer Bohrung (26) geeignet ist, die in der oberen Bohrung (21) oder in der Übergangsbohrung (22) der inneren Kammer (2) ausmündet.

2. Modul (1) nach Anspruch 1, wobei Gewindelöcher (20) in der oberen Fläche (13) zur Befestigung eines Sattels (8; 80; 180) eingerichtet sind, der mit der Verteilungs- oder Regelungsvorrichtung (3a; 3b; 4a; 4b; 4c; 5; 6) fest verbunden ist.

3. Kit zur Verteilung und Regelung eines unter Druck stehenden Gases, wobei das Kit umfasst:
- mehrere Module (1) nach einem der Ansprüche 1 und 2, wobei alle Module (1) identisch sind; und
- mehrere Verteilungs- oder Regelungsvorrichtungen (3a; 3b; 4a; 4b; 4c; 5; 6), die für eine Verteilung oder eine Regelung eines Gases vorgesehen sind, das in die inneren Kammern der Hauptkörper der Module (1) strömt;
wobei jede Verteilungs- oder Regelungsvorrichtung (3a; 3b; 4a; 4b; 4c; 5; 6) eine Kartusche (7) aufweist, die von einem rohrförmigen Körper gebildet ist, der für die Aufnahme im Inneren einer inneren Kammer (2) von jedem beliebigen der Module (1) geeignet ist, wobei die Kartusche (7) aufeinanderfolgend umfasst:
- eine erste zylindrische obere Hülse (71), die mindestens eine Ringdichtung trägt und zur dichten Anbringung in der oberen Bohrung (21) vorgesehen ist;
- eine zweite zylindrische obere Hülse (72) mit einem Außendurchmesser, der zum einen kleiner als der Innendurchmesser (D1) der oberen Bohrung (21) und als der Außendurchmesser der ersten oberen Hülse (71) und zum anderen größer als der Innendurchmesser (D2) der Übergangsbohrung (22) ist, wobei die zweite obere Hülse (72) mindestens ein oberes Loch (720) aufweist, das durchgängig ist und in einer oberen Kammer (761) ausmündet, die mindestens teilweise von der zweiten oberen Hülse (72) begrenzt ist,
- eine erste zylindrische Übergangshülse (73), die mindestens eine Ringdichtung trägt und zur dichten Anbringung in der Übergangsbohrung (22) vorgesehen ist, wobei die erste Übergangshülse (73) einen Außendurchmesser hat, der kleiner als der Außendurchmesser der zweiten oberen Hülse (72) ist;
- eine zweite zylindrische Übergangshülse (74) mit einem Außendurchmesser, der zum einen kleiner als der Innendurchmesser (D2) der Übergangsbohrung (22) und als der Außendurchmesser der ersten Übergangshülse (73) und zum anderen größer als der Innendurchmesser (D3) der unteren Bohrung (23) ist, wobei die zweite Übergangshülse (74) mindestens ein Übergangsloch (740) aufweist, das durchgängig ist und in einer Übergangskammer (762) ausmündet, die mindestens teilweise von der zweiten Übergangshülse (74) begrenzt ist, und
- eine untere zylindrische Hülse (75) mit einem Außendurchmesser, der kleiner als der Außendurchmesser der zweiten Übergangshülse (74) ist, wobei die untere Hülse (75) mindestens eine Ringdichtung trägt und zur dichten Anbringung in der unteren Bohrung (23) vorgesehen ist.

4. Verteilungs- und Regelungskit nach Anspruch 3, wobei mindestens eine Verteilungs- oder Regelungsvorrichtung (3a; 3b; 4a; 4b; 4c; 5; 6) im Inneren der Kartusche (7) ein relativ zu einem Sitz (330; 430; 53) zwischen einer Verschlussposition der Kommunikation zwischen der Übergangskammer (762) und der oberen Kammer (761) und einer Öffnungsposition der Kommunikation zwischen der Übergangskammer (762) und der oberen Kammer (761) bewegliches Ventil (31; 41; 51) umfasst.

5. Verteilungs- und Regelungskit nach Anspruch 4, wobei die Verteilungs- oder Regelungsvorrichtungen mindestens einen Druckregler (3a; 3b) umfassen, der die folgenden Regelungsorgane umfasst:
- einen Kolben (30), der im Inneren der zweiten Übergangshülse (74) in der Übergangskammer (762), die eine vorgelagerte Kammer bildet, gleitend angebracht ist, wobei der Kolben (30) ein oberes Ende aufweist, das das Ventil (31) bildet, und ein unteres Ende (32), das von einer Ringdichtung umgeben ist und im Inneren der unteren Hülse (75) in einer unteren Öffnung (763) gleitet, die nicht nach außen ausmündet;
- einen nachgelagerten Körper (33), der im Inneren der zweiten oberen Hülse (72) statisch angebracht ist und die obere Kammer (761), die eine nachgelagerte Kammer bildet, begrenzt, wobei der nachgelagerte Körper (33) ein zentrales Loch aufweist, das den Sitz (330) definiert, der einen Entspannungssitz bildet, der imstande ist, mit dem Ventil (31) zusammenzuwirken;
- ein elastisches Rückstellorgan (34), das den Kolben (30) und das Ventil (31) in Richtung der Verschlussposition beansprucht, entgegengesetzt zu einem reduzierten Druck in der nachgelagerten Kammer, welcher den Kolben (30) und das Ventil (31) in Richtung der Öffnungsposition beansprucht;
- einen oberen Stopfen (37), der im Inneren der ersten oberen Hülse (71) statisch angebracht ist;
- einen Drücker (38), der den oberen Stopfen (37) durchquert und imstande ist, eine Kraft auf das Ventil (31) in Richtung der Öffnungsposition auszuüben;
wobei der Kolben (30) einen inneren durchgängigen Kanal (300) mit zwei gegenüberliegenden Enden aufweist, umfassend, zum einen, ein offenes oberes Ende auf der Seite des nachgelagerten Körpers (33), das einen Entlastungssitz bildet, und zum andere ein offenes unteres Ende in der unteren Öffnung (763) der unteren Hülse (75), und wobei der Drücker (38) imstande ist, sich auf dem Entlastungssitz abzustützen, um ihn zu verstopfen;
und wobei der Druckregler (3a; 3b) ferner umfasst:
- einen Sattel (8), der an der Kartusche (7) befestigt ist und mit Befestigungselementen (83) für die Befestigung des Druckreglers (3a; 3b) auf der oberen Fläche (13) jedes beliebigen der Module (1) ausgestattet ist, wobei der Sattel (8) einen Schubkolben (86) integriert, der gleitend angebracht ist und in der Lage, sich auf dem Drücker (38) abzustützen, wobei dieser Schubkolben (86) über den Sattel (8) hinausreicht; und
- ein Regelsystem (9a; 9b), das auf dem Sattel (8) angebracht ist und auf den Schubkolben (86) und somit auf den Drücker (38) wirkt, um eine Regelung einer Öffnungskraft des Ventils (31) zu gestatten, die erforderlich ist, um Druck abzulassen.

6. Verteilungs- und Regelungskit nach Anspruch 5, wobei das Regelsystem ein mechanisches Regelsystem (9a) ist, das einen Halter (900) umfasst, der auf dem Sattel (8) befestigt ist und innen ein elastisches Rückstellorgan (901) stützt, das zwischen einer unteren Auflage (902), auf der sich der Schubkolben (86) abstützt, und einer oberen Auflage (903), die mechanisch in Position einstellbar ist, komprimiert ist, um eine Einstellung der von dem elastischen Rückstellorgan (901) auf den Schubkolben (86) ausgeübten Schubkraft zu erlauben.

7. Verteilungs- und Regelungskit nach Anspruch 5, wobei das Regelsystem ein pneumatisches Regelsystem (9b) ist, das einen Halter (91) umfasst, der auf dem Sattel (8) befestigt ist und innen einen vollen Hauptkolben (92) aufnimmt, der dicht und in dem Halter (91) gleitend angebracht ist, wobei dieser Hauptkolben (92) auf den Schubkolben (86) wirkt und einer Steuerdruckquelle (PP) unterliegt, um eine Einstellung der von diesem Hauptkolben (92) auf den Schubkolben (86) ausgeübten Schubkraft zu erlauben.

8. Verteilungs- und Regelungskit nach Anspruch 7, wobei der Hauptkolben (92) aufweist:
- einen oberen Abschnitt (921), der eine obere Oberfläche bietet, auf die der Steuerdruck (PP) wirkt; und
- einen unteren Abschnitt (922), der eine untere Oberfläche bietet, die auf den Schubkolben (86) wirkt, wobei die untere Oberfläche eine zu der oberen Oberfläche kleinere Grundfläche aufweist.

9. Verteilungs- und Regelungskit nach einem der Ansprüche 4 bis 8, wobei die Verteilungs- oder Regelungsvorrichtungen mindestens ein Absperrventil (4a; 4b; 4c) umfassen, welches die folgenden Regelungsorgane umfasst:
- einen Kolben (40), der im Inneren der zweiten Übergangshülse (74) in der Übergangskammer (762), die eine vorgelagerte Kammer bildet, gleitend angebracht ist wobei der Kolben (40) ein oberes Ende aufweist, das das Ventil (41) bildet, und ein unteres Ende (42), das von einer Ringdichtung umgeben ist und im Inneren der unteren Hülse (75) in einer unteren Öffnung (763) gleitet, die nach außen ausmündet;
- einen nachgelagerten Körper (43), der im Inneren der zweiten oberen Hülse (72) statisch angebracht ist und die obere Kammer (761), die eine nachgelagerte Kammer bildet, begrenzt, wobei der nachgelagerte Körper (43) ein zentrales Loch aufweist, das den Sitz (430) definiert, der mit dem Ventil (41) zusammenzuwirken;
- ein elastisches Rückstellorgan (44), das den Kolben (40) und das Ventil (41) in Richtung der Verschlussposition beansprucht;
- einen oberen Stopfen (47), der im Inneren der ersten oberen Hülse (71) statisch angebracht ist;
- einen Drücker (48), der den oberen Stopfen (47) durchquert und imstande ist, eine Kraft auf das Ventil (41) in Richtung der Öffnungsposition auszuüben;
und wobei das Absperrventil (4a; 4b; 4c) ferner umfasst:
- einen Sattel (80), der mit dem oberen Stopfen (47) fest verbunden und mit Befestigungselementen (830) für die Befestigung des Absperrventils (4a; 4b; 4c) auf der oberen Fläche (13) von jedem beliebigen der Module (1) ausgestattet ist; und
- einen Aktuator (19a; 19b; 19c), der auf dem Sattel (80) angebracht ist und auf den Drücker (48) wirkt, um die relative Position des Ventils (41) gegenüber dem Sitz (430) zwischen der Verschlussposition und der Öffnungsposition zu steuern.

10. Verteilungs- und Regelungskit nach Anspruch 9, wobei das Absperrventil (4a; 4b; 4c) einen Aktuator umfasst, der aus den folgenden Aktuatoren ausgewählt ist:
- einem manuellen Aktuator (19a), der ein Rädchen (190) umfasst, das mit einem im Sattel (80) verschraubten Schuborgan (191) fest verbunden ist und imstande, sich auf dem Drücker (48) abzustützen;
- einem pneumatischen Aktuator (19b), der einen Halter (192) umfasst, der auf dem Sattel (80) befestigt ist und von einem Schubkolben (193) durchquert wird, der imstande ist, sich unter der Inanspruchnahme einer Steuerdruckquelle (PC) auf dem Drücker (48) abzustützen;
- einem elektrischen Aktuator (19c), der einen Halter (197) umfasst, der auf dem Sattel (80) befestigt ist und von einem Schuborgan durchquert wird, das imstande ist, sich unter der Inanspruchnahme eines Elektromotors (198) auf dem Drücker (48) abzustützen.

11. Verteilungs- und Regelungskit nach Anspruch 10, wobei die Aktuatoren (19a, 19b, 19c) des Absperrventils (4a; 4b; 4c) untereinander austauschbar sind, wobei jedes Absperrventil (4a; 4b; 4c) die gleichen Regelungsorgane (40, 43, 44, 47, 48) und den gleichen Sattel (80) hat, wobei der Sattel (80) eine Gewindeöffnung (891) umfasst, in dessen Inneres das Schuborgan (191) des manuellen Aktuators (19a), der Halter (192) des pneumatischen Aktuators (19b) und der Halter (197) des elektrischen Aktuators (19c) geschraubt werden können.

12. Verteilungs- und Regelungskit nach einem der Ansprüche 4 bis 11, wobei die Verteilungs- oder Regelungsvorrichtungen mindestens eine Nichtrückkehr-Isoliervorrichtung (5) umfassen, die die folgenden Organe umfasst:
- einen Kolben (50), der im Inneren der ersten oberen Hülse (71) in der oberen Kammer (761), die eine nachgelagerte Kammer bildet, gleitend angebracht ist, wobei der Kolben (50) ein unteres Ende aufweist, das das Ventil (51) bildet;
- einen nachgelagerten Körper (52), der im Inneren der zweiten oberen Hülse (72) statisch angebracht ist und die obere Kammer (761) und die Übergangskammer (762), die eine vorgelagerte Kammer bildet, begrenzt, wobei der nachgelagerte Körper (52) ein zentrales Loch aufweist, das den Sitz (53) definiert, der mit dem Ventil (51) zusammenwirkt, das dem Druck des Gases in der Übergangskammer (762) in Richtung eines Lösens gegenüber dem Sitz (53) ausgesetzt ist;
- ein elastisches Rückstellorgan (54), das den Kolben (50) und das Ventil (51) in Richtung der Verschlussposition beansprucht;
und wobei die Nichtrückkehr-Isoliervorrichtung (5) ferner einen Sattel (180) umfasst, der mit Befestigungselementen (183) für die Befestigung der Nichtrückkehr-Isoliervorrichtung (5) auf der oberen Fläche (13) von jedem beliebigen der Module (1) ausgestattet ist, wobei der Sattel (180) einen geschlossenen Deckel derart bildet, dass sich das elastische Rückstellorgan (54) auf dem Sattel (180) abstützt.

13. Verteilungs- und Regelungskit nach einem der Ansprüche 3 bis 12, wobei die Verteilungs- oder Regelungsvorrichtungen mindestens eine Filtrationsvorrichtung (6) umfassen, die eine filtrierende Kartusche (60) umfasst, die im Inneren der oberen Kammer (761) aufgenommen ist und einen Einlass hat, der in der Übergangskammer (762) ausmündet,
und wobei die Filtrationsvorrichtung (6) ferner einen Sattel (180) umfasst, der mit Befestigungselementen (183) für die Befestigung der Filtrationsvorrichtung (6) auf der oberen Fläche (13) von jedem beliebigen der Module (1) ausgestattet ist, wobei der Sattel (180) einen geschlossenen Deckel bildet.

14. System zur Verteilung und Regelung (100) eines unter Druck stehenden Gases, das mindestens zum Teil auf der Basis eines Verteilungs- und Regelungskits nach einem der Ansprüche 3 bis 13 gebildet ist, wobei;
- Module (1) durch Befestigung mindestens einer Platte (15) eines Moduls (1) auf einer Platte (15) mindestens eines benachbarten Moduls (1) gekoppelt sind, wodurch die zentralen Löcher (18) der gemeinsam befestigten Platten (15) in Kommunikation versetzt werden;
- Verteilungs- oder Regelungsvorrichtungen (3a; 3b; 4a; 4b; 4c; 5; 6) auf den Hauptkörpern (10) aller oder eines Teils der Module (1) befestigt sind, mit ihren im Inneren der inneren Kammern (2) aufgenommenen Kartuschen (7);
- Bohrungen (26) in den zentralen Löchern (18) der Platten (15) ausgebildet sind, die an einer anderen Platte (15) befestigt sind, wobei derartige Bohrungen (26) Kommunikationskanäle bilden, die in der oberen Bohrung (21) oder in der Übergangsbohrung (22) der inneren Kammer (2) des betroffenen Moduls (1) ausmünden, um die Verteilungs- oder Regelungsvorrichtungen der gekoppelten Module (1) in Kommunikation zu versetzen.

15. Station zur Verteilung von gasförmigem Wasserstoff zum Befüllen eines Brennstoffzellen-Vorratsbehälters, wobei die Verteilerstation gasförmigen Wasserstoffs mindestens ein Verteilungs- und Regelungssystem (100) nach Anspruch 14 umfasst.

## Claims

1. A module (1) for a kit for distributing and regulating a pressurized gas, said module (1) comprising a main body (10) having a parallelepiped general shape and having four lateral faces (11, 12) parallel in pairs and extending between an upper face (13) and a lower face (14) parallel to one another,
wherein an inner chamber (2) is formed in the main body (10) by crossing it therethroughout to open into the upper face (13) and into the lower face (14), said inner chamber (2) being intended to receive thereinside a distribution or regulation device (3a; 3b; 4a; 4b; 4c; 5; 6) provided for a distribution or regulation of a gas passing in the inner chamber (2), said inner chamber (2) successively comprising:
- a cylindrical upper bore (21) opening into the upper face (13),
- a cylindrical intermediate bore (22) having an internal diameter (D2) which is smaller than the internal diameter (D1) of the upper bore (21), and
- a cylindrical lower bore (23) opening into the lower face (14) and having an internal diameter (D3) which is smaller than the internal diameter (D2) of the intermediate bore (22);
and wherein a subplate (15) is provided on each lateral face (11; 12) adapted for fastening on a subplate (15) of a similar adjacent module (1), wherein said subplate (15) has peripheral holes (17) serving for the passage of fastening screws (170) and a central blind hole (18), in particular adapted to guide a drilling (26) opening into the upper bore (21) or into the intermediate bore (22) of the inner chamber (2).

2. The module (1) according to claim 1, wherein threaded holes (20) are formed in the upper face (13) for fastening a bracket (8; 80; 180) secured to the distribution or regulation device (3a; 3b; 4a; 4b; 4c; 5; 6).

3. A kit for distributing and regulating a pressurized gas, said kit comprising:
- several modules (1) in accordance with any one of claims 1 and 2, wherein all the modules (1) are identical; and
- several distribution or regulation devices (3a; 3b; 4a; 4b; 4c; 5; 6) provided for a distribution or regulation of a gas passing in the inner chambers of the main bodies of said modules (1);
wherein each distribution or regulation device (3a; 3b; 4a; 4b; 4c; 5; 6) comprises a cartridge (7) formed by a tubular body adapted to be received inside an inner chamber (2) of any of the modules (1), wherein said cartridge (7) successively comprises:
• a first cylindrical upper sleeve (71) supporting at least one O-ring gasket and intended to be tightly mounted in the upper bore (21);
• a second cylindrical upper sleeve (72) having an external diameter which is, on the one hand, smaller than the internal diameter (D1) of the upper bore (21) and the external diameter of the first upper sleeve (71) and, on the other hand, larger than the internal diameter (D2) of the intermediate bore (22), said second upper sleeve (72) having at least one upper through hole (720) opening into an upper chamber (761) delimited at least partially by the second upper sleeve (72),
• a first cylindrical intermediate sleeve (73) supporting at least one O-ring gasket and intended to be tightly mounted in the intermediate bore (22), said first intermediate sleeve (73) having an external diameter which is smaller than the external diameter of the second upper sleeve (72);
• a second cylindrical intermediate sleeve (74) having an external diameter which is, on the one hand, smaller than the internal diameter (D2) of the intermediate bore (22) and the external diameter of the first intermediate sleeve (73) and, on the other hand, larger than the internal diameter (D3) of the lower bore (23), said second intermediate sleeve (74) having at least one intermediate through hole (740) opening into an intermediate chamber (762) delimited at least partially by the second intermediate sleeve (74), and
• a cylindrical lower sleeve (75) having an external diameter which is smaller than the external diameter of the second intermediate sleeve (74), wherein said lower sleeve (75) supports at least one O-ring gasket and is intended to be tightly mounted in the lower bore (23).

4. The distribution and regulation kit according to claim 3, wherein at least one distribution or regulation device (3a; 3b; 4a; 4b; 4c; 5; 6) comprises, inside the cartridge (7), a plunger (31; 41; 51) movable relative to a seat (330; 430; 53) between a position of closing the communication between the intermediate chamber (762) and the upper chamber (761) and a position of opening the communication between the intermediate chamber (762) and the upper chamber (761).

5. The distribution and regulation kit according to claim 4, wherein the distribution or regulation devices comprise at least one pressure regulator (3a; 3b) comprising the following regulator members:
- a piston (30) slidably mounted inside the second intermediate sleeve (74) in the intermediate chamber (762) forming an upstream chamber, wherein said piston (30) has an upper end forming the plunger (31) and a lower end (32) surrounded by an O-ring gasket and sliding inside the lower sleeve (75) in a lower orifice (763) which does not open outwards;
- a downstream body (33) mounted static inside the second upper sleeve (72) and delimiting the upper chamber (761) forming a downstream chamber, wherein said downstream body (33) has a central hole defining the seat (330) forming a relief seat adapted to cooperate with the plunger (31);
- an elastic biasing member (34) urging the piston (30) and the plunger (31) in the direction of the closure position, opposite to a reduced pressure in the downstream chamber which urges the piston (30) and the plunger (31) in the direction of the opening position;
- an upper plug (37) mounted static inside the first upper sleeve (71);
- a tappet (38) crossing the upper plug (37) and adapted to exert a force on the plunger (31) in the direction of the opening position;
wherein the piston (30) has an inner through channel (300) having two opposite ends comprising, on the one hand, an upper end open on the side of the downstream body (33) and forming a drain seat and, on the other hand, a lower end open into the lower orifice (763) of the lower sleeve (75), and wherein the tappet (38) is adapted to bear on the drain seat to plug it;
and wherein the pressure regulator (3a; 3b) further comprises:
- a bracket (8) fastened on the cartridge (7) and provided with fastening elements (83) for fastening the pressure regulator (3a; 3b) on the upper face (13) of any of the modules (1), wherein the bracket (8) embeds a push piston (86) slidably mounted and adapted to bear on the tappet (38), this push piston (86) extending beyond the bracket (8); and
- a setting system (9a; 9b) mounted on the bracket (8) and acting on the push piston (86) and thus on the tappet (38) to enable a setting of an opening force of the plunger (31) required to relieve the pressure.

6. The distribution and regulation kit according to claim 5, wherein the setting system is a mechanical setting system (9a) comprising a support (900) fastened on the bracket (8) and supporting thereinside an elastic biasing member (901) compressed between a lower journal (902) on which bears the push piston (86) and an upper journal (903) whose position is mechanically settable in order to enable a setting of the pushing force exerted by the elastic biasing member (901) on the push piston (86).

7. The distribution and regulation kit according to claim 5, wherein the setting system is a pneumatic setting system (9b) comprising a support (91) fastened on the bracket (8) and receiving thereinside a solid main piston (92) tightly and slidably mounted in the support (91), wherein this main piston (92) acts on the push piston (86) and is subjected to a pilot pressure (PP) source in order to enable a setting of the pushing force exerted by this main piston (92) on the push piston (86).

8. The distribution and regulation kit according to claim 7, wherein the main piston (92) has:
- an upper section (921) providing an upper surface on which the pilot pressure (PP) acts; and
- a lower section (922) providing a lower surface acting on the push piston (86), wherein said lower surface has a surface area smaller than the upper surface.

9. The distribution and regulation kit according to any one of claims 4 to 8, wherein the distribution or regulation devices comprise at least one block valve (4a; 4b; 4c) comprising the following regulator members:
- a piston (40) slidably mounted inside the second intermediate sleeve (74) in the intermediate chamber (762) forming an upstream chamber, wherein said piston (40) has an upper end forming the plunger (41) and a lower end (42) surrounded by an O-ring gasket and sliding inside the lower sleeve (75) in a lower orifice (763) opening outwards;
- a downstream body (43) mounted static inside the second upper sleeve (72) and delimiting the upper chamber (761) forming a downstream chamber, wherein said downstream body (43) has a central hole defining the seat (430) cooperating with the plunger (41);
- an elastic biasing member (44) urging the piston (40) and the plunger (41) in the direction of the closure position;
- an upper plug (47) mounted static inside the first upper sleeve (71);
- a tappet (48) crossing the upper plug (47) and adapted to exert a force on the plunger (41) in the direction of the opening position;
and wherein the block valve (4a; 4b; 4c) further comprises:
- a bracket (80) secured to the upper plug (47) and provided with fastening elements (830) for fastening the block valve (4a; 4b; 4c) on the upper face (13) of any of the modules (1); and
- an actuator (19a; 19b; 19c) mounted on the bracket (80) and acting on the tappet (48) to control the relative position of the plunger (41) with respect to the seat (430) between the closure position and the opening position.

10. The distribution and regulation kit according to claim 9, wherein the block valve (4a; 4b; 4c) comprises an actuator selected from the following actuators:
- a manual actuator (19a) comprising a knob (190) secured to a push member (191) screwed in the bracket (80) and adapted to bear on the tappet (48);
- a pneumatic actuator (19b) comprising a support (192) fastened on the bracket (80) and crossed by a push piston (193) adapted to bear on the tappet (48) under the action of a control pressure (PC) source;
- an electric actuator (19c) comprising a support (197) fastened on the bracket (80) and crossed by a push member adapted to bear on the tappet (48) under the action of an electric motor (198).

11. The distribution and regulation kit according to claim 10, wherein the actuators (19a, 19b, 19c) of the block valve (4a; 4b; 4c) are interchangeable, each block valve (4a; 4b; 4c) having the same regulator members (40, 43, 44, 47, 48) and the same bracket (80), wherein said bracket (80) comprises a threaded orifice (891) inside which the push member (191) of the manual actuator (19a), the support (192) of the pneumatic actuator (19b) and the support (197) of the electric actuator (19c) can be screwed.

12. The distribution and regulation kit according to any one of claims 4 to 11, wherein the distribution or regulation devices comprise at least one anti-backflow isolation device (5) comprising the following members:
- a piston (50) slidably mounted inside the first upper sleeve (71) in the upper chamber (761) forming a downstream chamber, wherein said piston (50) has a lower end forming the plunger (51);
- a downstream body (52) mounted static inside the second upper sleeve (72) and delimiting the upper chamber (761) and the intermediate chamber (762) forming an upstream chamber, wherein said downstream body (52) has a central hole defining the seat (53) cooperating with the plunger (51) subjected to the pressure of the gas in the intermediate chamber (762) in the direction of detachment with respect to the seat (53);
- an elastic biasing member (54) urging the piston (50) and the plunger (51) in the direction of the closure position;
and wherein the anti-backflow isolation device (5) further comprises a bracket (180) provided with fastening elements (183) for fastening the anti-backflow isolation device (5) on the upper face (13) of any of the modules (1), said bracket (180) forming a closed lid so that said elastic biasing member (54) bears on said bracket (180).

13. The distribution and regulation kit according to any one of claims 3 to 12, wherein the distribution or regulation devices comprise at least one filtering device (6) comprising a filter cartridge (60) received inside the upper chamber (761) and having an inlet opening into the intermediate chamber (762),
and wherein the filtering device (6) further comprises a bracket (180) provided with fastening elements (183) for fastening the filtering device (6) on the upper face (13) of any of the modules (1), said bracket (180) forming a closed lid.

14. A system (100) for distributing and regulating a pressurized gas, formed at least partially from a distribution and regulation kit according to any one of claims 3 to 13, wherein:
- modules (1) are coupled by fastening at least one subplate (15) of a module (1) on a subplate (15) of at least one adjacent module (1), setting in communication the central holes (18) of the subplates (15) fastened together;
- distribution or regulation devices (3a; 3b; 4a; 4b; 4c; 5; 6) are fastened on the main bodies (10) of all or part of the modules (1), with their cartridges (7) received inside the inner chambers (2);
- drillings (26) are formed in the central holes (18) of the subplates (15) which are fastened to another subplate (15), such drillings (26) forming communication channels opening into the upper bore (21) or into the intermediate bore (22) of the inner chamber (2) of the concerned module (1) in order to set in communication the distribution or regulation devices of the coupled modules (1).

15. A gaseous hydrogen distribution station for filling a fuel cell tank, said gaseous hydrogen distribution station comprising at least one distribution and regulation system (100) according to claim 14.
